(19) Europäisches Patentamt
European Patent Office
Office européen des brevets

(11) **EP 1 892 597 A1**

(12) **EUROPÄISCHE PATENTANMELDUNG**

(43) Veröffentlichungstag:
  **27.02.2008 Patentblatt 2008/09**

(51) Int Cl.:
  *G05B 23/02* (2006.01)    *G07C 3/00* (2006.01)
  *G05B 19/418* (2006.01)

(21) Anmeldenummer: **06017842.3**

(22) Anmeldetag: **26.08.2006**

(84) Benannte Vertragsstaaten:
  **AT BE BG CH CY CZ DE DK EE ES FI FR GB GR HU IE IS IT LI LT LU LV MC NL PL PT RO SE SI SK TR**
  Benannte Erstreckungsstaaten:
  **AL BA HR MK YU**

(71) Anmelder: **Renner, Peter**
  **51515 Kürten (DE)**

(72) Erfinder: **Renner, Peter**
  **51515 Kürten (DE)**

(74) Vertreter: **Lippert, Stachow & Partner**
  **Patentanwälte**
  **Frankenforster Strasse 135-137**
  **51427 Bergisch Gladbach (DE)**

Bemerkungen:
  Amended claims in accordance with Rule 137(2) EPC

(54) **Zustandsüberwachung von Maschinen und technischen Anlagen**

(57) Um die Überwachung von technischen Prozessen weiter zu verbessern, insbesondere die abnutzungs- oder verschleißbedingt Einflüsse auf die Überwachung von den äußeren Einflüssen noch genauer zu differenzieren, wird ein Verfahren beschrieben, bei welchem Messdaten über Messkanäle erfasst und die Messdaten eines Messkanals in mehrere Zeitreihen von Zustandswerten mit zueinander unterschiedlichen Zeitbasen verarbeitet werden, wobei in einer Lernphase Grenzwertspannen ermittelt und in einer Überwachungsphase beim Überschreiten von Grenzwerten überwachungsbezogene Schritte ausgelöst werden. Das erfindungsgemäße Verfahren zeichnet sich dadurch aus, dass in der Überwachungsphase ein Gutwertebereich der Zustandswerte für eine Zeitreihe mit oberem und unterem Grenzwert berechnet wird unter Einbeziehung einer in der Lernphase vorbestimmten Grenzwertspanne und eines in der Überwachungsphase bestimmten Zustandsbasiswertes der Zeitreihe.

Die Erfindung betrifft ferner ein Expertensystem zur Umsetzung eines solchen Verfahrens.

Fig. 1

**Beschreibung**

Die Erfindung betrifft ein Verfahren zur Überwachung von technischen Prozessen in Maschinen, Anlagen oder dergleichen nach dem Oberbegriff von Anspruch 1 sowie ein entsprechendes Expertensystem zur Ausführung eines solchen Verfahrens.

Technische Prozesse benötigen eine Überwachung, um rechtzeitig notwendige Wartungsmaßnahmen einzuleiten, so dass Folgeschäden oder ein Totalausfall und die damit verbundene lange Stillstandszeiten vermieden werden können. Allgemein ist festzustellen, dass Veränderungen an Maschinen, Apparaten und Anlagen häufig durch Verschleiß, Korrosion, Ablagerungen, Verstopfung, Verschmutzung verursacht werden. In der Regel wird auch heute noch eine laufleistungs- oder betriebszeitorientierte Wartung von Maschinen/Anlagen durchgeführt. Diese hat jedoch den Nachteil, dass dann häufig Wartungsarbeiten durchgeführt werden, die zu diesem Zeitpunkt noch nicht notwendig sind. Ferner können bei einer solchen Vorgehensweise trotzdem Ausfälle nicht ausgeschlossen werden, welche beispielsweise auf Materialfehler beruhen, die eine Wartung der Anlage oder der Maschine außerhalb der üblichen Wartungsintervalle erforderlich gemacht hätten.

Auf dem Gebiet sind erste Ansätze für eine zustandsorientierte Wartung von Maschinen, Anlagen etc. bekannt. Eines dieser bekannten Verfahren basiert auf der Durchführung von mathematischen Berechnungen mittels neuronaler Netze. Dieses Verfahren hat bislang das Laborstadium noch nicht überwunden und stellt insofern keine praktikable Lösung dar. In der europäischen Patentanmeldung EP 1 403 750 A1 ist ein System zum Aufspüren von Veränderungen an technischen Prozessen beschrieben zur Realisierung einer zustandsorientierten Wartung bzw. Instandsetzung. In diesem System werden Messdaten über Messketten erfasst, wobei voneinander abhängige Messgrößen zu Bezugsgruppen zusammengefasst und Gültigkeitsbedingungen für die Messdaten definiert werden und wobei Messdaten zur Auswertung nur benutzt werden, wenn die Gültigkeitsbedingungen erfüllt sind. Dabei werden die Messdaten der Bezugsgruppen mit Bezugsgrößen verknüpft. Das System überwacht den zeitlichen Verlauf der Messdaten und erkennt daraus Veränderungen, die beispielsweise auf einen drohenden Ausfall eines Bauteils hinweisen. Die europäische Patentanmeldung EP 1 533 669 A1 betrifft ein weiteres solches Überwachungssystem, wobei die Messkanäle von voneinander abhängigen Messgrößen zu Bezugsgruppen zusammengefasst werden.

Die in den genannten europäischen Patentanmeldungen offenbarten Systeme stellen einen ersten praktikablen Ansatz für die zustandsorientierte Wartung bzw. Instandsetzung dar. Diese Systeme fundieren auf der Erkenntnis, dass auf technische Prozesse äußere, nicht auf eine Veränderung des Prozesses selbst zurückgehende Einflüsse einwirken, die sich in den Messdaten niederschlagen. Die auf Verschleiß, Korrosion, Ablagerungen oder ähnlichen beruhenden abnutzungsbedingten dauerhaften Veränderungen werden von äußeren Einflüssen, die auf die Maschinen/Anlagen und somit auf den technischen Prozess einwirken, getrennt, sodass damit die abnutzungsbedingten dauerhaften Veränderungen erfassbar sind, welche wiederum zur Erstellung von Grenzwerten genutzt werden können. Auf diese Weise ist der Zustand der Maschinen/Anlagen in Wesentlichen unabhängig von den äußeren Einflüssen erfassbar, was für eine besonders gute Umsetzung einer zustandsorientierten Wartung eine notwendige Voraussetzung ist.

Die beschriebenen äußeren Einflüsse auf den technischen Prozess werden automatisch unabhängig von der Entstehungsursache erkannt und bei der Auswertung der Daten berücksichtigt. Die Quellen solcher äußeren Einflüsse sind vielfältig. Je nach technischem Prozess kann dieser beispielsweise durch den Nacht-Tag-Zyklus, Monats-Zyklus oder auch durch den Jahreszyklus der Erde im Hinblick auf Licht- und/oder Temperaturschwankungen verursacht werden. Ferner können auch andere Störquellen wie beispielsweise das Fahren einer Straßenbahn in der Nähe zur betrachteten Maschine/Anlage bei erschütterungssensiblen Prozessen Einflüsse auf den Prozess ausüben, welche sich in den Messergebnissen widerspiegeln. Diese Einflüsse können insofern Perioden im Sekundenbereich, jedoch auch im Bereich von Stunden, Tagen, Monaten oder Jahren aufweisen. Darüber hinaus können auch betriebsbedingte Änderungen wie ein Lastwechsel bei einer Maschine zu einer Änderung von Messergebnissen führen, welche nicht auf eine Verschlechterung der Maschine/Anlage zurückgehen.

Bei den beschriebenen Systemen des Standes der Technik werden Messdaten über Messkanäle erfasst und die Messdaten eines Messkanals in mehrere Zeitreihen von Zustandswerten mit zueinander unterschiedlichen Zeitbasen verarbeitet, wobei in einer Lernphase Grenzwertspannen ermittelt und in einer Überwachungsphase beim Überschreiten von Gutwertgrenzen überwachungsbezogene Schritte ausgelöst werden.

Der Erfindung liegt die Aufgabe zugrunde, die Überwachung von solchen technischen Prozessen weiter zu verbessern, insbesondere die abnutzungs-, alterungs- und verschleißbedingten, d.h. die betriebsbedingten Einflüsse auf die Messdatenerfassung von den äußeren, messwertverfälschenden Einflüssen noch genauer zu differenzieren.

Diese Aufgabe wird auf überraschend einfache Weise schon mit einem Verfahren mit den Merkmalen von Anspruch 1 sowie einem Expertensystem mit den Merkmalen von Anspruch 21 gelöst.

Verfahrensseitig zeichnet sich das erfindungsgemäße Verfahren dadurch aus, dass in der Überwachungsphase ein Gutwertebereich der Zustandswerte für eine Zeitreihe mit oberem und unterem Grenzwert berechnet wird unter Einbeziehung einer in der Lernphase vorbestimmten Grenzwertspanne und eines in der Überwachungsphase bestimmten Zustandsbasiswertes der Zeitreihe.

Sowohl die Lernphase als auch die Überwachungsphase sind dabei in einem Zustand des technischen Prozesses ausführbar, in welchem dieser sich in einer Art statischen, d.h. eingeschwungenen Betriebsphase befindet. In der Lernphase werden erfindungsgemäß Parameter wie eine Grenzwertspanne ermittelt, welche in der eigentlichen Überwachungsphase des Prozesses fest vorgegeben und zur Auswertung verwendet werden. Dadurch, dass der Zustandsbasiswert einer Zeitreihe nicht fest vorgegeben ist, sondern variabel immer angepasst wird, gelingt es im Rahmen der Erfindung, die äußeren oder Betriebseinflüsse auf den Prozess und damit auf die Messwerte noch besser von den Messwertänderungen zu trennen, welche durch prozessinterne Abläufe wie Verschleiß, Korrosion, Ablagerung etc. hervorgerufen werden. Insofern wird der Gutwertebereich der Zustandswerte immer "nachgefahren" und den äußeren Verhältnissen und Einflüssen angepasst. Dabei umfasst eine Zeitreihe eine Anzahl von Messwerten, von zeitlich verdichteten Messwerten oder von Daten, welche auf andere Weise aus Messwerten berechnet wurden. Die in den Zeitreihen umfassten Werte werden im Folgenden allgemein als Zustandswerte bezeichnet. Ferner beschreibt der Gutwertbereich einer Zeitreihe den Wertebereich innerhalb dessen die Zustandswerte liegen müssen, damit kein Fehlerfall in Bezug auf die Zustandswerte festgestellt wird. In diesem Fall werden die Zustandswerte als Gutwerte bezeichnet.

Es kann vorteilhaft sein, wenn die obere Grenze des Gutwertebereichs einer Zeitreihe durch das Addieren der halbierten, in der Lernphase vorbestimmten Grenzwertspanne zum Zustandsbasiswert der Zeitreihe berechnet wird. In gleicher Weise kann die untere Grenze des Gutwertebereichs durch Subtraktion der halbierten Grenzwertspanne vom Zustandsbasiswert ermittelt werden.

Messgrößen in den Messkanälen können beispielsweise Temperaturen, Drücke, Ströme, Spannungen, Durchflüsse, Drehzahlen, Schwingungsamplituden etc. sein, die über zugeordnete Sensoren erfasst werden, welche wiederum die Messdaten zur Aufbereitung und/oder Datenverarbeitung bereitstellen. Allgemein können diese Messgrößen beliebige Prozess-, Maschinen- und/oder Anlagenparameter sein. Die Messdaten werden nun in mehreren Zeitreihen von Zustandswerten mit zueinander unterschiedlichen Zeitbasen verarbeitet. Solche unterschiedliche Zeitbasen können beispielsweise Zeitintervalle in Sekunden-, Minuten-, Stunden-, Tages-, Wochen-, Monats- oder Jahresskalierung sein.

Dabei kann es vorteilhaft sein, wenn eine einzelne Zeitreihe von Zustandswerten eine vorbestimmte Anzahl von Werten zur Festlegung eines Prüfblocks umfasst und der Zustandsbasiswert in der Überwachungsphase durch eine Datenverarbeitung von zumindest zwei aktuellen Gutwerten der jeweiligen Zeitreihe berechnet wird. Aktuell bedeutet dabei, dass die betreffenden Gutwerte gerade aktuelle Mitglieder in der Zeitreihe sind. Die Ermittlung des Zustandsbasiswertes kann beispielsweise durch Mittelwertbildung des aktuellen Maximalwertes und des aktuellen Minimalwertes der Zeitreihe oder auch durch Mittelwertbildung aller Gutwerte der Zeitreihe berechnet werden. Dadurch, dass der eine Art Mittellinie festlegende Zustandsbasiswert einer Zeitreihe von den aktuellen Zustandswerten abhängt, wird insofern der Gutwertebereich der Zeitreihe an die auf den Prozess einwirkenden äußeren Einflüsse wie die Umgebungstemperatur und ferner die Betriebseinflüsse angepasst, welche nicht direkt auf eine Verschlechterung der Maschine/Anlage zurückgehen.

Insbesondere, wenn mehrere Messkanäle zusammengefasst oder zusammen für eine Auswertung bereitgestellt werden sollen, kann es vorteilhaft sein, wenn die Gutwerte einer Zeitreihe auf den Zustandsbasiswert normiert sind. Dabei kann vom jeweiligen Gutwert der Zustandsbasiswert abgezogen und die sich ergebende Differenz durch die halbe Grenzwertspanne der Zeitreihe geteilt werden. Eine solche Berechnung kann für jede Zeitreihe durchgeführt werden. Auf diese Weise liegen alle Zeitreihen auf einer Basislinie von 0 und weisen die Grenzwerte $\pm$ 1 auf, sodass in einer einzelnen Graphendarstellung eine Vielzahl von Zeitreihen verschiedenster Messkanäle bei gleicher Zeitbasis angegeben werden kann, unabhängig von dem Betrag der jeweiligen Messwerte oder verdichtete Messwerte, welche beide allgemein als Zustandswerte bezeichnet sind. Die Darstellung solcher normierter Werte von einer oder mehrerer Zeitreihen in einem Graph wird im Folgenden als Normwertgraphik bezeichnet.

Es kann vorteilhaft sein, wenn die vorbestimmte Gutwertspanne einer Zeitreihe nicht nur die in der Lernphase ermittelte Grenzwertspanne, sondern auch noch einen einstellbaren Offset berücksichtigt. Beispielsweise kann es vorteilhaft sein, wenn diese Gutwertspanne durch Addition der in der Lernphase ermittelten Grenzwertspanne zu einem vor dem Start der Überwachungsphase vorbestimmten Offset berechnet wird. Durch die Berücksichtigung dieses Offsets wird der Situation Rechnung getragen, dass die für die Ermittlung der Grenzwertspanne verwendete Lernphase eine endliche, möglichst kurze Dauer zum schnellen Umschalten in die Überwachungsphase aufweist und insofern die innerhalb des begrenzten Zeitraums ermittelte Grenzwertspanne unter Umständen auch beim Nichtauftreten von Prozessstörungen in der Realität größer ist. Durch die Berücksichtigung dieses Offsets werden insofern Fehlinterpretationen, insbesondere Fehlalarme vermieden. In diesem Fall unterscheiden sich die Grenzwertwertspanne und die Gutwertspanne der Zustandswerte um diesen Offset. Die im vorstehenden Absatz beschriebene Normierung ist dann entsprechend auszuführen.

Es ist zweckmäßig, wenn die Grenzwertspanne einer vorgegebenen Zeitreihe durch die Schwankungsbreite der Zustandswerte der Zeitreihe in der Lernphase festgelegt wird. Diese Lernphase ist zur Überwachungsphase in Bezug auf den technischen Prozess identisch, da sich der Prozess auch hier in einer quasi statischen, d.h. eingeschwungenen Betriebsphase befindet. Eine solche Phase kann sich beispielsweise dadurch auszeichnen, dass eine Betriebstemperatur oder eine Betriebsdrehzahl erreicht ist. Bei Regelvorgängen wird durch Veränderungen des Sollwertes zuerst eine dynamische, nicht eingeschwungene Phase auftreten und sich danach die geregelte, quasi statische Betriebsphase einstellen. Der Begriff quasi statisch wird hier verwendet um auszudrücken, dass auch auf einen eingeschwungenen Zustand ständig weitere Einflussfaktoren wie wechselnde Belastungen, Umgebungstemperaturen etc. auf den Prozess einwirken können, sodass in diesem Fall eine reine statische Betriebsphase nie erreicht werden kann.

Es ist zweckmäßig, wenn in der Lernphase, bezogen auf einen vorbestimmten Messkanal ein Zustandswert der Zeitreihe mit niedrigster Zeitbasis kontinuierlich ermittelt und in die Zeitreihe eingefügt wird, wobei in der Überwachungsphase ein Gutwert der Zeitreihe mit niedrigster Zeitbasis kontinuierlich ermittelt und in die Zeitreihe eingefügt wird. Dabei beschreibt die Bezeichnung Gutwert einen Zustandswert, welcher innerhalb des Gutwertebereichs der jeweiligen Zeitreihe liegt und damit keine Überschreitung der Gutwertgrenzen darstellt. Eine solche, auf einen festen Zeitbereich eingestellte Zeitreihe wird als Prüfblock bezeichnet.

Um in der Lernphase, ausgehend von Zustandswerten einer Zeitreihe mit niedriger Zeitbasis einen Zustandswert einer Zeitreihe mit höherer Zeitbasis zu ermitteln, kann vorgesehen sein, dass ein solcher Zustandswert durch eine statistische Auswertung, insbesondere durch Mittelwertbildung von Zustandswerten der Zeitreihe mit der niedrigeren Zeitbasis ermittelt und in die Zeitreihe mit höherer Zeitbasis eingefügt wird. Eine solche Mittelwertbildung kann beispielsweise die Mittelwertbildung der Zustandswerte einer Zeitreihe oder auch nur eines Teils davon umfassen. In gleicher Weise kann es vorteilhaft sein, wenn in der Überwachungsphase ein Gutwert einer Zeitreihe mit vorgegebener Zeitbasis durch statistische Auswertung, wie beispielsweise durch Mittelwertbildung von Gutwerten der Zeitreihen mit einer niedrigeren Zeitbasis ermittelt und in die erstgenannte Zeitreihe eingefügt wird. Auf diese Weise lassen sich prinzipiell beliebige Zeitreihen (Prüfblöcke) erstellen, welche jeweils das zeitliche Verhalten des überwachten technischen Prozesses innerhalb beliebiger Zeitintervalle ermitteln, beispielsweise das Verhalten des technischen Prozesses bzw. der Messgrößen im Sekundenbereich oder auch im Intervall eines Monats. Dabei kann vorgesehen sein, dass jede einzelne Zeitreihe einen unabhängigen Zustandsbasiswert aufweist, der wie oben stehend beschrieben während der Überwachungsphase ermittelt wird.

Es ist zweckmäßig, wenn bei der Einreihung des neu ermittelten Wertes, d.h. eines Zustandswertes in die jeweilige Zeitreihe der zeitlich am längsten in der Reihe befindliche Wert entfernt wird, wenn eine für die jeweilige Zeitreihe vorgegebene Anzahl von eingereihten Werten erreicht wurde. Auf die beschriebene Weise wird der Datensatz im jeweiligen Prüfblock den zeitlichen Veränderungen des Prozesses angepasst.

Befindet sich das erfindungsgemäße Verfahren in der Überwachungsphase, werden Zustandswerte, welche sich außerhalb des Gutwertebereichs befinden, in einer vorteilhaften Ausführungsform nicht in die entsprechende Zeitreihe eingefügt. Insofern werden solche Zustandswerte außerhalb des Gutwertebereichs der Zeitreihe auch nicht für die Ermittlung von Zustandswerten in höheren Zeitreihen verwendet. In der Lernphase ist jedoch üblicherweise keine Grenzwertspanne bzw. ein Zustandswertbereich und damit auch kein Gutwertebereich vorgegeben. Demnach werden alle Zustandswerte unabhängig vom Wert in die jeweilige Zeitreihe eingefügt, soweit diese Zustandswerte gültig sind. Damit ist sichergestellt, dass innerhalb der Lernphase die notwendigen Vorbestimmungen von Parametern wie Grenzwertspanne bzw. Gutwertspanne für jede Zeitreihe (Prüfblock) und jeden Messkanal durchgeführt werden.

Um vor dem Auftreten eines Ausfalls in den technischen Prozesses eingreifen zu können, kann vorgesehen sein, dass in der Überwachungsphase beim Auftreten eines Zustandswertes in einer Zeitreihe mit vorgegebener Zeitbasis, der außerhalb des Gutwertebereichs liegt, ein überwachungsbezogener Schritt durchgeführt wird. Ein solcher überwachungsbezogener Schritt kann beispielsweise in Form eines automatisch erzeugten Beobachtungshinweises für die betreffende Zeitreihe an den Nutzer realisiert sein, insbesondere auch in Form eines elektrischen Signals, das weiter verarbeitet wird.

Da auch schon der zeitliche Verlauf einer Zeitreihe einen Trend anzeigen kann, der sich auf einen Zustand eines in dem technischen Prozess integrierten Teils wie einer Maschine oder einer Anlage bezieht, kann es erfindungsgemäß vorgesehen sein, einen vom zeitlichen Verlauf einer Zeitreihe abhängigen Parameter, insbesondere eine zeitliche Ableitung des Kurvenverlaufs der Zeitreihe zu ermitteln und in Abhängigkeit dieses Parameters einen vorgegebenen überwachungsbezogenen Schritt auszuführen. Hierbei können beispielsweise die erste und/oder die zweite zeitliche Ableitung berücksichtigt werden.

In einer besonders vorteilhaften Ausführungsform kann vorgesehen sein, dass beim Überschreiten des Gutwertebereichs durch einen Zustandswert innerhalb einer Zeitreihe von Zustandswerten nachfolgend die erste und/oder zweite Ableitung der Zeitreihe ermittelt wird und in Abhängigkeit davon dann der spezifische überwachungsbezogene Schritt ausgewählt wird.

In besonders als kritisch eingestuften Fällen kann beispielsweise auch vorgesehen sein, dass der technische Prozess gestoppt wird, um durch den Ausfall eines Teils der Anlage verursachte Folgeschäden zu vermeiden. Ist der Dringlichkeitsbedarf aufgrund der erfassten Informationen nicht so hoch, kann es beispielsweise auch ausreichen, eine Warnung an den Nutzer abzugeben. Dabei können die ermittelten Ableitungen des Kurvenverlaufs mit entsprechenden Parametern verglichen werden, die insbesondere im Verlauf der Lernphase ermittelt wurden oder auf andere Art vorgegeben wurden.

Besonders in Fällen, in welchen der Zustandsbasiswert für Zeitreihen, insbesondere für alle Zeitreihen eines Messkanals, unabhängig voneinander bestimmt werden, kann es zweckmäßig sein die in den jeweiligen Zeitreihen entstehenden Situationen, welche einen überwachungsbezogenen Schritt nach sich ziehen, unabhängig voneinander zu betrachten. Insofern kann es auch zweckmäßig sein, dass in der Überwachungsphase ein außerhalb des Gutwertebereichs liegender Zustandswert einer Zeitreihe nicht zur Ermittlung eines Zustandswertes der Zeitreihe mit einer höheren Zeitbasis verwendet wird.

Um zu vermeiden, dass nach dem Auftreten eines Zustandswertes außerhalb des Gutwertebereichs das erfindungsgemäße Verfahren zu einer Schwingung zwischen Zuständen in einem erlaubten und einem nicht erlaubten Bereich führt, kann vorgesehen sein, dass nach dem Auftreten dieses außerhalb des Gutwertebereichs liegenden Zustandswertes in der Zeitreihe die nachfolgend ermittelten Zustandswerte einer Zeitreihe solange als ungültig verworfen und nicht in die Zeitreihe eingefügt werden, bis ein Zustandswert in einem Wertintervall liegt, das allein durch die Zustandswertspannung und den Zustandsbasiswert der Zeitreihe festgelegt wird. Mit Bezug auf den oben beschriebenen Offset bedeutet dies, dass nach dem Auftreten des Schlechtwertes der Zustandswert mindestens um diesen Offset fallen bzw. steigen muss, damit die nachfolgenden Zustandswerte wieder als gültige Zustandswerte in die Zeitreihe eingefügt und damit auch für die Ermittlung von Zustandswerten für die nachfolgenden Zeitreihen mit größerer Zeitbasis verwendet werden. Dabei muss der Zustandswert um den Offset fallen, wenn der Schlechtwert oberhalb des Gutwertebereichs lag und der Zustandswert muss um den Offset steigen, wenn der Schlechtwert unterhalb des Gutwertebereichs lag. Erst danach werden die Zustandswerte wieder als gültig eingeordnet.

Insbesondere in Fällen, bei welchen die in der Lernphase ermittelte Grenzwertspanne so gering ist, dass der damit für die Überwachungsphase ermittelte Gutwertebereich häufig überschritten werden würde, ohne dass ein Verschleiß oder ähnliches aufgetreten ist, kann vorgesehen sein, dass für eine Zeitreihe eine Mindestzustandsspanne vorbestimmt wird, welche die in der Lernphase ermittelte Grenzwertspanne ersetzt, wenn letztere kleiner als die Mindestzustandsspanne ist.

In bestimmten Ausführungsformen kann es zweckmäßig sein, Messkanäle, welche physikalische Größen an Maschinen oder Baugruppen von Maschinen erfassen, zu Bezugsgruppen zu bündeln, wenn die erfassten Messgrößen den gleichen Betriebsbedingungen und äußeren Einflüssen unterworfen sind. Solche Bezugsgruppen von Messgrößen können beispielsweise Temperaturen oder Drücke in Zylinderköpfen mehrzylindriger Verbrennungsmotoren, Abgastemperaturen mehrzylindriger Motore, Druck- bzw. Strömungsgeschwindigkeiten verzweigter Rohrleitungssysteme oder auch Temperaturen in Wärmetauschern sein.

Als weiteres Beispiel für eine solche Bezugsgruppe seien Messkanäle genannt, mit welchen die Lagertemperaturen einer mehrfach gelagerten Antriebswelle erfasst werden. Die Lagerbelastungen der einzelnen Lager sind durch das Drehmoment und die Drehzahl bestimmt, die auf alle Lager in gleicher Weise einwirken. Die Schwankungsbreiten der Lagertemperaturen werden wie beschrieben in der Lernphase erfasst, wodurch eine Grenzwertspanne festgelegt wird, die in der Überwachungsphase zur Festlegung eines Gutwertebereichs verwendet wird. Insbesondere bei solchen Temperaturmessungen können die äußeren Einflüsse auf die Messungen im Bereich betriebsbedingter Schwankungen liegen. Ein solcher äußerer Einfluss bei einer Temperaturmessung kann insbesondere die Umgebungstemperatur sein, welche tages- und jahreszeitlichen Schwankungen unterworfen ist. Diese Schwankungen sind nicht kalkulierbar und in der Regel auch in einer Lernphase nicht erfassbar, da dies eine nicht vertretbare Zeitdauer in Anspruch nehmen würde. Insofern kann es zweckmäßig sein, mittels vorgegebenen Regeln die Messdaten von mehreren Messkanälen innerhalb einer Bezugsgruppe zu Zustandswerten gekoppelter Kanäle zu verarbeiten, um äußere Einflüsse auf die Messung zu minimieren. Solche gekoppelten Kanäle werden im Folgenden als Hybridkanäle bezeichnet. Die Zustandswerte eines solchen Hybridkanals können wie die Zustandswerte eines einzelnen Messkanals in Zeitreihen mit unterschiedlichen Zeitbasen zeitverdichtet werden, wobei diese Zeitreihen wie die Zeitreihen eines einzelnen Messkanals nach der Festlegung einer Grenzwertspanne in einer Lernphase für die Überwachung des technischen Prozesses in der Überwachungsphase verwendet werden können.

Um solche äußere Einflüsse wie die Umgebungstemperatur auf Temperaturmessungen zu kompensieren, kann erfindungsgemäß vorgesehen sein, dass durch Differenzbildung von Messdaten aus physikalisch korrelierten Messkanälen Zustandswerte eines Hybridkanals gebildet werden. Wirkt beispielsweise auf zwei Temperaturmesskanäle die Umgebungstemperatur in gleicher Weise, kann der Einfluss der Umgebungstemperatur auf die Messung durch Differenzbildung der Messdaten der beiden Kanäle kompensiert werden. Insofern ermöglicht es die Erfindung, auch kleine Temperaturänderungen im Langzeitvergleich zu erkennen, auch wenn diese Änderungen viel kleiner sind als die überlagerte Schwankungsbreite der Umgebungstemperatur, da der Einfluss der Umgebungstemperatur in dem Hybridkanal herausgerechnet ist.

Darüber hinaus kann es auch zweckmäßig sein, Zustandswerte eines Hybridkanals durch Summenbildung von Messdaten aus Messkanälen einer Bezugsgruppe zu bilden, sodass damit auch erfasst werden kann, wenn sich die Messwerte der Messkanäle einer Bezugsgruppe gleichmäßig verschlechtern, was im zeitlichen Verlauf eines Hybridkanals der durch Differenzbildung von Messwerten aus mehreren Messkanälen gebildet ist, nicht erfasst werden kann. Bei der erfindungsgemäßen Bildung eines Hybridkanals durch Summation der Messwerte von mehreren Messkanälen ist es vorteilhaft, wenn der Einfluss der Umgebungstemperatur dadurch berücksichtigt wird, dass die Umgebungstemperatur in einem einzelnen Messkanal erfasst wird und, multipliziert mit der Anzahl der summierten Kanäle von dem Summenwert des Hybridkanals abgezogen wird.

Besonders vorteilhaft ist es, wenn beide genannten Hybridkanäle für die Messkanäle einer Bezugsgruppe erstellt werden, sodass die Anzahl der zu überwachenden Kanäle trotz einer Vielzahl von Kanälen innerhalb einer Bezugsgruppe auf zwei, einen Differenz-und einen Summenkanal, reduziert werden kann. Es sei darauf hingewiesen, dass mit dem beschriebenen Merkmal des Bildens eines Hybridkanals neben der Umgebungstemperatur auch andere allgemeine äußere Einflüsse kompensiert werden können, die sich auf die Messwerte der Messkanäle einer Bezugsgruppe auswirken.

Vorrichtungsseitig löst die Erfindung die obige Aufgabe mit einem Expertensystem zur Überwachung von technischen Prozessen mit zumindest einem Messkanal, welcher Sensor-, Leitungs- und Auswertemittel aufweist zur Erfassung von Messdaten, Datenverarbeitungsmittel zum Verarbeiten der Messdaten und zum Ermitteln von mehreren Zeitreihen von Zustandswerten mit unterschiedlichen Zeitbasen aus den Messdaten, sowie Speichermittel zum Speichern der Zeitreihen von Zustandsdaten, wobei in einer Lernphase Grenzwertspannen der Zeitreihen berechenbar und speicherbar sind. Darüber hinaus umfasst das erfindungsgemäße Expertensystem ein Mittel zur Ausführung oder Auslösung eines überwachungsbezogenen Schrittes. Dieses Mittel kann beispielsweise ein elektrischer Port sein, an dem ein entsprechendes Steuersignal ausgebbar ist oder auch ein Anzeigemittel um anzuzeigen, dass in einer Überwachungsphase zumindest ein Zustandwert einer Zeitreihe eine vorgegebene Grenze (Gutwertgrenze) überschritten hat. Das erfindungsgemäße Expertensystem zeichnet sich dadurch aus, dass das Datenverarbeitungsmittel in der Überwachungsphase für eine Zeitreihe ein Gutwertebereich mit oberem und unterem Grenzwert unter Einbeziehung einer in der Lernphase vorbestimmten Grenzwertspanne und eines in der Überwachungsphase bestimmten Zustandsbasiswertes der Zeitreihe berechnet. Dabei kann es zweckmäßig sein, wenn die Zustandswerte mit einer Zeitmarke versehen sind, sodass erstere zeitlich genau zugeordnet werden können.

Darüber hinaus betrifft die Erfindung auch ein auf einem Speichermedium abgelegtes Computerprogrammprodukt, das in einen Speicher eines Computers ladbar ist und Softwarecodeabschnitte umfasst, mit denen eines der oben beschriebenen erfindungsgemä-βen Verfahren ausgeführt wird.

Die Erfindung wird im Folgenden durch das Beschreiben mehrerer Ausführungsformen und weiterer erfindungsgemäßer Merkmale unter Bezugnahme auf die beiliegenden Figuren erläutert, wobei

Fig.1   eine schematische Darstellung eines technischen Prozesses in Form des Betriebs einer sechsfach gelagerten Antriebswelle, die erfindungsgemäß überwacht ist,

Fig. 2   ein schematisches Ablaufdiagramm zur Darstellung einer erfindungsgemäßen Überwachung des in Fig. 1 dargestellten technischen Prozesses,

Fig. 3   eine Trendgrafik von Zustandswerten von einem der in Fig. 1 dargestellten Sensoren,

Fig. 4   ein erfindungsgemäß ausgebildetes Expertensystem zur Überwachung eines technischen Prozesses zur Erläuterung des Datenflusses,

Fig. 5   eine Darstellung einer Minuten-, einer Stunden- und einer Tageszeitreihe für einen Messkanal,

Fig. 6   eine Darstellung einer Minuten-, einer Stunden-, einer Tages- und einer Wochenzeitreihe für zwei weitere Messkanäle,

Fig. 7   eine Darstellung einer Minuten-, einer Stunden- und einer Tageszeitreihe für einen weiteren Messkanal,

Fig. 8   eine Darstellung einer Minutenzeitreihe für einen anderen Messkanal und

Fig. 9   eine Darstellung einer Zeitreihe für drei weitere Messkanäle

zeigt.

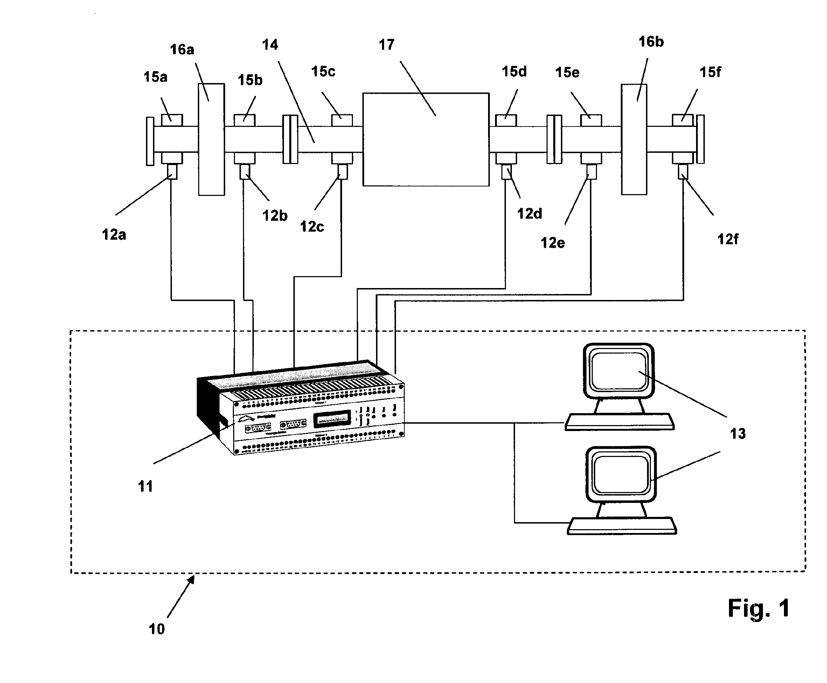

Fig. 1 zeigt den Betrieb einer sechsfach gelagerten Antriebswelle als technischen Prozess, der mit dem erfindungsgemäßen Verfahren mittels des Expertensystems 10 überwacht wird. Das Expertensystem 10 umfasst eine Messeinheit 11, welche mit PCs 13 zur Maschinenüberwachung und Prozessführung datenverbunden ist. Hierzu läuft auf den PCs eine entsprechende Software ab. Eine Datenverarbeitung wird je nach Ausführungsform direkt in einer CPU und/oder in einem speziellen Datenverarbeitungsmodul ausgeführt. Die PCs weisen ferner nicht dargestellte analoge und/oder digitale Ausgangsports auf, über die Signale und Informationen, insbesondere Steuersignale ausgegeben werden können. Die Messeinheit 11 weist analoge Eingänge auf, an die jeweils ein Temperatursensor 12a bis 12f angeschlossen ist. Diese messen jeweils die Temperatur in einem Lager 15a bis 15f, an welchen sich die Antriebswelle 14 abstützt, die über Zahnräder 16a, 16b eine oder mehrere nicht dargestellte Vorrichtungen antreibt. Die Welle selbst wird durch einen Elektromotor 17 in Bewegung versetzt.

Ein derartiger Antrieb kann beispielsweise dazu dienen, über die angegebenen Zahnräder 16a, 16b eine Pumpe anzutreiben. Je nach Bauart der als Interface zwischen den Temperatursensoren 12a bis 12f und den Rechnern 13 ausgebildeten Messeinheit 11 kann diese verschiedene Aufgaben übernehmen. Sind beispielsweise die Temperatursensoren als Thermoelemente ausgebildet, liefern diese Spannungssignale, die in der Messeinheit 11 in digitale Messwerte in °C umgewandelt und an die PCs 13 zur Datenverarbeitung weitergegeben werden. Diese Werte werden von den Rechnern zur Durchführung des erfindungsgemäßen Verfahrens verwendet, hierzu ist auf diesen eine entsprechende Software installiert.

Die genannten Komponenten bilden ein Expertensystem, welches Trends im Temperaturverlauf der erfassten Zustandswerte und weitere andere Veränderungen erfassen kann. Es ist verständlich, dass die ermittelten Temperaturwerte nicht konstant sind, sondern sich mit der Drehzahl der Welle, der Radialkraft und auch mit der Umgebungstemperatur ändern. Wesentlich ist nun, kleine Veränderungen aufzuspüren, die nicht durch derartige äußere Einflüsse sondern durch Belastungen des früheren bzw. momentanen Betriebs verursacht wurden bzw. werden und den Zustand des jeweiligen Lagers 15a bis 15f widerspiegeln.

Schon kleine Veränderungen der Temperaturwerte der einzelnen Lager können Hinweise für die zu erwartenden Standzeiten geben.

Geringe progressive Temperaturänderungen deuten auf einen baldigen Ausfall hin. Bei sprunghaften Veränderungen steht ein Crash unmittelbar bevor. Diese Veränderungen werden mit dem erfindungsgemäßen Expertensystem erfasst und Warnhinweise gegeben, um auf einen sich anbahnenden Ausfall hinzuweisen oder auch um optimale Zeitpunkte für Wartungsarbeiten rechnergestützt und automatisch festzulegen. Beispielsweise kann auf dem Monitor des PCs 13 ein entsprechender Hinweis an den Benutzer gegeben werden oder über einen nicht dargstellten Ausgang beliebige Steuersignale ausgegeben werden. Ferner können auf den Monitoren der PCs 13 Trendgraphiken für die Zeitreihen der Messkanäle ausgegeben werden.

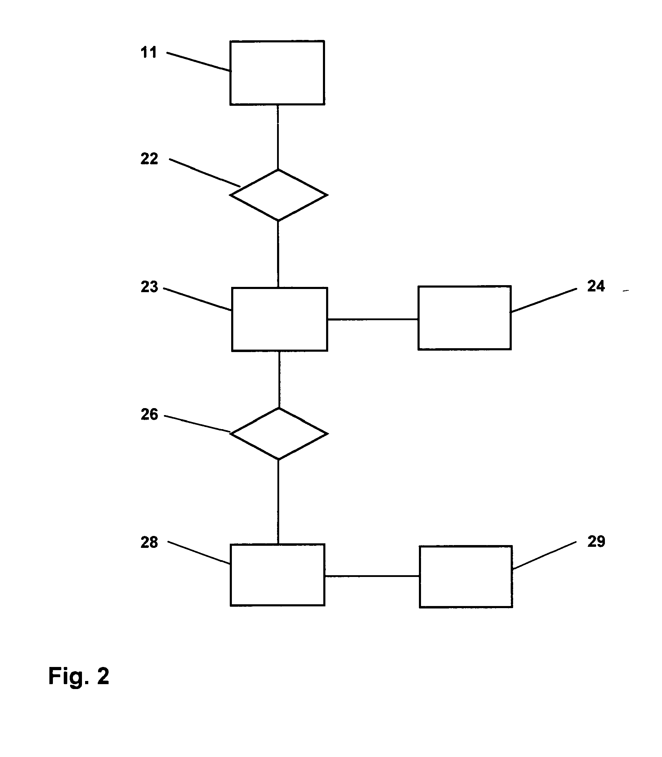

Fig. 2 zeigt ein Ablaufdiagramm zur Darstellung des erfindungsgemäßen Verfahrens zur Überwachung des Betriebs der in Fig. 1 dargestellten Antriebswelle. Es versteht sich, dass die Erfindung nicht auf technische Prozesse mit Temperaturmessungen beschränkt ist. Beispielsweise können auch Druckverläufe bei Pumpen und Verdichtern oder auch Durchflussmengen von flüssigen oder gasförmigen Medium erfasst werden. Alle verfügbaren Messdaten, die den Einfluss von Verschleiß, Verschmutzung, Korrosion etc. widerspiegeln, können in das System aufgenommen werden, sodass der Benutzer ein Gesamtbild des Maschinenzustandes erhält. Somit ist der Maschinen- bzw. Anlagenzustand genau ermittelbar, sodass die optimalen Zeitpunkte für Wartungsarbeiten festgelegt werden können und ferner frühzeitig ein drohender Ausfall der Anlage vorhergesehen und die notwendigen Gegenmaßnahmen ergriffen werden können. Die von der Messeinheit 11 erfassten Zustandstemperaturwerte der Lager 15a bis 15f werden hier in einer Bezugsgruppe zusammengefasst, da die verschiedenen Temperatursensoren voneinander abhängige, korrelierte Zustände ermitteln, sodass die Zusammenverarbeitung dieser Zustandswerte weitere Informationen liefern kann, beispielsweise ob sich ein Lager anders verhält als die anderen. Diese Gruppierung von Messdaten verschiedener, miteinander korrelierter Messkanäle kann wesentliche Informationen für die Überwachung des technischen Prozesses liefern. Insofern kann es sehr vorteilhaft sein, die gruppierten Messdaten zusammen zu verarbeiten. Hierauf wird untenstehend noch näher eingegangen.

Im Folgenden sei zunächst zur Vereinfachung der Darstellung angenommen, dass die Messdaten aus den sechs Messkanälen unabhängig voneinander verarbeitet werden. Fig. 2 zeigt die Verarbeitung der Messdaten eines einzelnen Messkanals, d.h. eines einzelnen Temperatursensors in Fig. 1. Die von der Messeinheit 11 digital abgegebenen Temperaturwerte werden im Modul 20 auf ihre Gültigkeit untersucht. Soweit eine vorgegebene Gültigkeitsbedingung nicht erfüllt ist, werden die Daten verworfen. Die Daten werden nur als gültig eingeordnet, wenn sich der technische Prozess in einer quasi statischen, d.h. eingeschwungenen Betriebsphase befindet. Für den vorliegenden Fall bedeutet dies, dass die Antriebswelle angelaufen ist und zumindest eine vorgegebene Betriebstemperatur erreicht ist. Als Kriterien für die Gültigkeit der Messdaten kann in dem beschriebenen Beispiel eine Mindestdrehzahl der Welle in Verbindung mit einer Anlaufzeit vorgesehen werden. Erst nach Ablauf der Anlaufzeit und nur, wenn die Drehzahl der Antriebswelle den vorgegebenen Minimumwert überschritten hat, sind die Temperaturwerte für die Weiterverarbeitung nutzbar, da die Gültigkeitsbedingung für die Messwerte erreicht ist. Die Messwerte werden durch das Gültigkeitsmodul 20 beim Vorliegen dieser Bedingung für die weitere Bearbeitung freigegeben.

Im Modul 22 werden nun die einlaufenden Daten in Prüfblöcke mit unterschiedlichen Zeitbasen zeitlich verdichtet, und im Modul 23 gespeichert. Dabei werden zuerst in einer Lernphase bestimmte Parameter ermittelt, die in der nachfolgenden Überwachungsphase vorgegeben und fest sind. Ein solcher in der Lernphase festgelegter Wert ist insbesondere die Grenzwertspanne der Zustandswerte eines Prüfblocks, welche die Spanne, d.h. die Schwankungsbreite der Zustandswerte angibt, die vom Expertensystem als Gutwerte eingeordnet werden.

Dieser Wertebereich bestimmt sich durch die Grenzwertspanne und den Zustandsbasiswert der jeweiligen Zeitreihe, der in der hier beschriebenen Ausführungsform durch eine Mittelwertbildung des in der Zeitreihe abgelegten Maximalwertes und des in der Zeitreihe abgelegten Minimalwertes bestimmt ist. In einer anderen Ausführungsform kann dieser Zustandsbasiswert auch durch Mittelwertbildung aller in der Zeitreihe aufgeführten Zustandswerte gebildet werden.

In dem angegebenen Beispiel liefern die Temperatursensoren jeweils einen einzelnen Messwert pro Sekunde. Diese Werte für den Prüfblock mit kleinstem Zeitintervall werden direkt verwendet. Die statistische Verdichtung der Messdaten erfolgt über die Erstellung von Zustandswerten in Zeitreihen, wobei diese Zustandswerte in Abhängigkeit der jeweiligen Zeitreihen beispielsweise Minuten-, Stunden-, Tages-, Wochen-, Monats oder Jahreswerte sein können. Somit können z.B. Datensätze für Minuten-, Stunden-, Tages-, Wochen-, Monats- oder Jahreswerte der Messdaten erzeugt werden. Beispielsweise wird ein Zustandswert in dem Prüfblock mit nächst höherer Zeitbasis, d.h. dem Prüfblock mit Zustandsminutenwerten durch Mittelwertbildung einer vorgegebenen Anzahl von Messwerten berechnet. Ein Zustandswert in dem Prüfblock mit nächst höherer Zeitbasis, d.h. in dem Prüfblock mit Zustandsstundenwerten wird wiederum durch Mittelwertbildung einer vorgegebenen Anzahl von Zustandswerten im Prüfblock der Minutenzustandswerte berechnet, usw.

Nach der Festlegung dieser Zeitreihen (Prüfblöcke) mit unterschiedlichen Zeitbasen im Modul 22 und Speicherung im Modul 23 werden die erstellten Zeitreihen im Modul 24 anwenderabrufbar als Trendausgabe auf einem Schirm ausgegeben und dargestellt. Somit besteht für den Nutzer die Möglichkeit, Trends der erfassten Datensätze visuell zu erfassen. Die erfassten Daten können über lange Zeiträume zurückverfolgt und grafisch dargestellt werden. Das Trendausgabemodul 24 liefert die Trends der Messkanäle unabhängig davon, ob Veränderungen aufgetreten sind.

In dem nachfolgenden Bewertungsmodul 26 werden die statistischen Werte der Zeitreihen automatisch auf Veränderungen untersucht. Dabei wird erfasst, ob vorgegebene Trendwertschranken überschritten wurden bzw. wie sich der Verlauf der Zeitreihe(n) über die Zeit verändert hat. Beispielsweise wird erfasst, ob diese Veränderung linear über die Zeit ist oder ein progressives Verhalten zeigt. Im Ansprechen auf das Ergebnis des Bewertungsmoduls 26 werden im Modul 28 die überwachungsbezogenen Schritte eingeleitet, soweit sich dies im Modul 26 als notwendig herausgestellt hat. Beispielsweise kann ein Messkanal in eine Beobachtungs- oder auch in eine Warnliste eingefügt werden und dies dem Nutzer kenntlich gemacht werden. Wird eine kritische Situation erfasst, kann auch ein Alarm ausgeben oder ein Steuersignal, mit welchem beispielsweise der technische Prozess, hier der Betrieb der Antriebswelle 7 notausgeschaltet werden kann.

Zur Dokumentierung des Ablaufs des technischen Prozesses ist vorgesehen, in einer Datenbank 29 in einem Speicher des Expertensystems die vom Bewertungsmodul 26 ausgegebenen Meldungen und Signale zu speichern.

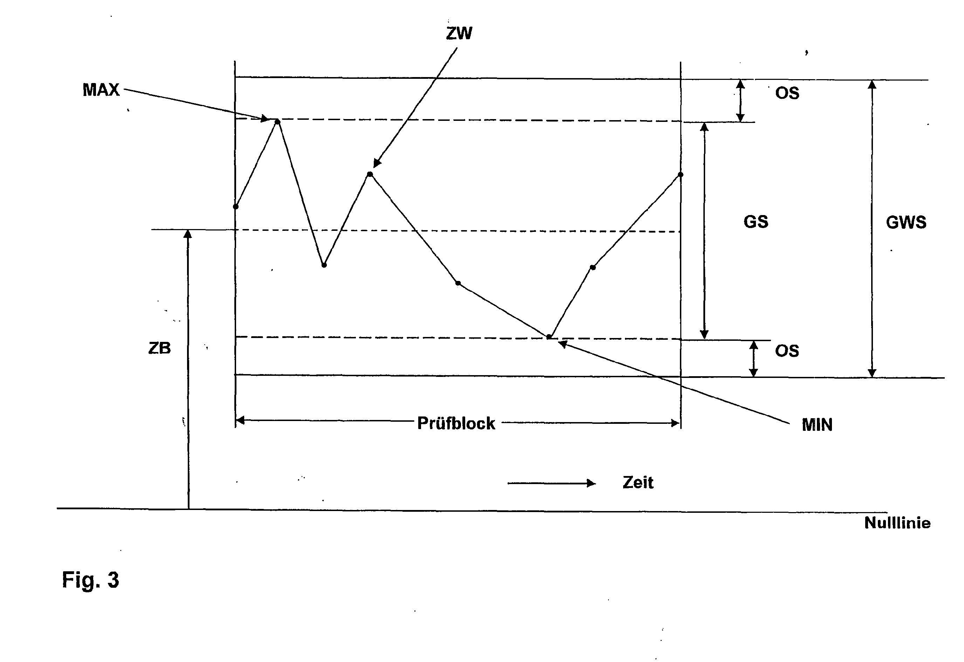

Mit Bezug auf Figur 3 wird im Folgenden die Erzeugung eines Prüfblocks für die Zustandwerte einer vorgegebenen Zeitbasis beschrieben, wie sie im Modul 22, siehe Fig. 2, umgesetzt ist. Dabei wird zuerst die Zeitbasis mit dem kürzesten Zeitintervall betrachtet, d.h. die erste Zeitreihe, welche sich in der beschriebenen Ausführungsform durch 60 im Sekundentakt erfasste Einzelwerte der von der Messeinheit bereitgestellten Temperaturwerten eines der Temperatursensoren zusammensetzt, siehe Fig. 1. Die im Modul 22 angelangten Werte haben dass Gültigkeitsmodul 20 durchlaufen und sind als gültig identifiziert worden, da der Zustand des technischen Prozesses als quasistatisch erfasst wurde. Sowohl in der Lernphase als auch in der Überwachungsphase werden Messwerte, die nicht als gültige Messwerte erkannt wurden, in dieser Ausführungsform für die weitere Auswertung nicht verwendet.

Vor dem Start der Überwachungsphase wird in der Lernphase für jede Zeitreihe von Zustandswerten die jeweilige Grenzwertspanne ermittelt, welche in der nachfolgenden Überwachungsphase fest vorgegeben wird. In der ersten Zeitreihe, d.h. der Zeitreihe mit dem kürzesten Zeitintervall, stellen die Temperaturmesswerte eines Sensors die Zustandswerte der Zeitreihe dar, da die Messwerte nicht verdichtet sind. Die Prüfblocklänge des Minutenprüfblocks ist vom Anwender in Minutenschritten einstellbar. Ist der Prüfblock beispielsweise zur Aufnahme von 60 Messwerte vorgewählt, dauert es genau 1 Minute bis der Prüfblock mit den Zustandswerten gefüllt ist, da diese mit einer Rate von 1/sec bereitgestellt werden.

In der beschriebenen Ausführungsform wird die Grenzwertspanne der jeweiligen Zeitreihe durch die Differenz des Maximalwertes und des Minimalwertes innerhalb der Zeitreihe in der Lernphase ermittelt. Die Grenzwertspanne für den ersten Prüfblock ergibt sich demnach durch die Subtraktion des Minimalwertes von dem Maximalwert innerhalb des Minutenprüfblockes. Nachdem der Prüfblock die maximale Anzahl von hier 60 Werten umfasst, wird mit jedem neuen Wert der zeitlich älteste Zustandswert aus dem Prüfblock entfernt. Insofern sind die Prüfblöcke gleitend angelegt. Soweit der Maximalwert oder der Minimalwert aus der Reihe entfernt wird, kann sich demnach in der Lernphase dann eine neue Grenzwertspanne ergeben, welche eine neue Schwankungsbreite der Zustandsreihe angibt.

In dem beschriebenen Beispiel ist die zweite Zeitreihe eine Stunden-Zeitreihe, welche verdichtete Zustandswerte der Minuten-Zeitreihe aufnimmt, wobei die Verdichtung der Zustandswerte über eine Mittelwertbildung durchgeführt wird. Jeder Zustandswert in der Stunden-Zeitreihe wird durch eine Mittelwertbildung von 60 Zustandswerten der Minuten-Zeitreihe ermittelt. Wie bei allen Prüfblöcken ist auch die Prüfblocklänge des Stundenprüfblocks anwenderseitig vorwählbar.

Jeder Zustandswert in der Tages-Zeitreihe wird durch eine Mittelwertbildung von 24 Zustandswerten der Stunden-Zeitreihe ermittelt. Jeder Zustandswert in der Wochen-Zeitreihe wird durch eine Mittelwertbildung von 7 Zustandswerten der Tages-Zeitreihe ermittelt.

Jeder Zustandswert in der Jahres-Zeitreihe wird durch eine Mittelwertbildung von 52 Zustandswerten der Wochen-Zeitreihe ermittelt.

Insbesondere bei einem intermittierenden Betrieb der zu überwachenden Maschine/Anlage oder beim Anfahren eines neuen Arbeitspunktes wie einer neuen Drehzahl eines Motors kann es vorkommen, dass für eine gewisse Zeit keine gültigen Messwerte ermittelbar sind, da die Maschine/Anlage sich nicht in einem eingeschwungenen Zustand befindet. Diese in der Überwachungsphase auftretende nichtstationäre Betriebsphase wird vom Expertensystem als dynamisch erkannt und insofern die Messwerte als ungültig verworfen. Um zu vermeiden, dass in solchen Situationen auch in Zeitreihen mit höheren Zeitbasen schon bei wenigen ungültigen Messwerten keine Zustandswerte ermittelbar sind, sind für die Zeitreihen jeweils Mindestzahlen von Zustandswerte vorgegeben, die vorliegen müssen, damit eine zeitliche Verdichtung der Werte zur Ermittlung eines Zustandswertes für die nächsthöhere Zeitreihe durchgeführt werden kann. In der beschriebenen Ausführungsform ist vorgesehen, dass eine Verdichtung durchgeführt wird, wenn zumindest 33% der Zustandswerte innerhalb einer Zeitreihe vorliegen. Sind z.B. in der Stunden-Zeitreihe, deren Zeitintervall in der beschriebenen Ausführungsform 60 Minuten beträgt, d.h. 60 Werte umfasst, innerhalb von 60 Minuten nur 25 Werte ermittelbar, so wird mit den erfassten Zustandswerten dennoch ein verdichteter Zustandswert für die nächsthöhere Zeitreihe, hier die Tages-Zeitreihe berechnet, da die Anzahl der ermittelten Werte über der vorgegebenen Grenze von 20 Werten liegt. Andernfalls wird ein Dummy-Wert in die nächsthöhere Zeitreihe eingefügt. In einer anderen Ausführungsform ist diese Mindestanzahl von Zustandswerten nicht für alle Zeitreihe gleich festgelegt, sondern kann je nach Zeitbasis verschieden sein.

Es sei darauf hingewiesen, dass die Dauer der einzelnen Zeitreihen manuell einstellbar ist und die oben beschriebenen Zeitbereiche der Zeitreihen sowie die Anzahl der Zeitreihen in dem angegebenen Beispiel nur exemplarisch sind. Ein solche, auf einen festen Zeitbereich eingestellte Zeitreihe wird wie schon angegeben als Prüfblock bezeichnet.

Auf die beschriebene Weise wird in der Lernphase für die Zeitreihe eine jeweilige Grenzwertspanne ermittelt. Dabei können die Grenzwertspannen für Zeitreihen mit sehr großem Zeitbereich, beispielsweise einer Monats- oder Jahres-Zeitreihe diese Grenzwertspanne auch manuell eingegeben werden, da ansonsten die Lernphase unverhältnismäßig lange dauern würde. In der Lernphase werden alle Zustandswerte unabhängig vom Wert in die jeweilige Zeitreihe eingefügt, soweit diese Zustandswerte auf gültige Messwerte zurückgehen. Somit werden auch alle Zustandswerte für die Verdichtung der Zustandswerte zur Ermittlung eines Zustandswertes für die nächste Zeitreihe verwendet.

Wenn die Grenzwertspannen für die Zeitreihen wie beschrieben ermittelt bzw. manuell vorgegeben wurden, kann in einen Überwachungsmodus geschaltet werden, in welchem diese Grenzwertspannen (Schwankungsbreiten) fest vorgegeben sind. In der beschriebenen Ausführungsform wird eine Gutwertespanne durch die Addition einer Offsetspanne zur der in der Lernphase ermittelten Grenzwertspanne festgelegt. Diese Offsetspanne ist manuell voreinstellbar und wird wie die Grenzwertspanne in der beschriebenen Ausführungsform während der Überwachungsphase konstant gehalten. In einer anderen Ausführungsform umfasst die Gutwertespanne nur die Grenzwertspanne, d.h. die Offsetspanne ist identisch Null.

Die Übergabe von Mess- bzw. Zustandswerten in die nächsthöhere Zeitreihe ist identisch mit der Vorgehensweise in der Lernphase. Falls jedoch ein Zustandswert außerhalb des Gutwertebereichs liegt, wird in dieser beschriebenen Ausführungsform der Zustandswert in der Überwachungsphase für die Ermittlung der Zustandswerte der höheren Zeitreihen nicht berücksichtigt. Zusätzlich wird in der betreffenden Zeitreihe ein überwachungsbezogener Schritt ausgelöst, worauf untenstehend näher eingegangen wird.

In jedem Prüfblock weisen die Messwerte bzw. Zustandswerte der einzelnen Kanäle einen maximal zulässigen zeitlichen Gradienten auf. Der Inhalt der Prüfblöcke wird in Prüfblockgraphiken dargestellt, die als Trendgraphiken bezeichnet werden. In den kleinen Zeitbereichen wie Minuten und Stunden ändern sich die Zustandswerte durch unterschiedliche Einflüsse, z.B. durch Schwankungen in der Stromversorgung oder der Umgebungstemperatur. Durch die Art der Darstellung nähern sich die Trendgraphiken mit größerem Zeitbereich im Gutzustand immer mehr einer horizontalen Geraden. Eine Neigung weg von dieser Horizontalen kann dann eine Zustandsänderung der Maschine/Anlage anzeigen, welche u.U. Wartungsarbeiten erfordert. Die wesentliche Aufgabe der Datenverarbeitung in den verschiedenen Prüfblocks besteht darin, die Gradienten der jeweiligen Zeitreihen zu ermitteln und mit den zulässigen, in der Lernphase ermittelten Gradienten zu vergleichen. Dabei sei darauf hingewiesen, dass die in der Lernphase ermittelten Grenzwertspannen direkt einem Gradienten der Zeitreihe entsprechen, da der Zeitbereich jeder Zeitreihe vorgegeben ist.

Die beschriebenen Verhältnisse in einem beispielhaften Prüfblock zeigt Fig. 3 mit acht Zustandswerten ZW. Der Gutwertespanne GWS wird durch die Grenzwertspanne GS und die doppelte Offsetspanne OS festgelegt. Der Gutwertebereich wird durch die Gutwertespanne GWS und einen Zustandsbasiswert ZB festgelegt. Dieser Zustandsbasiswert ZB wird sowohl in der Lernphase als auch in der Überwachungsphase in der beschriebenen Ausführungsform des erfindungsgemäßen Expertensystems durch die Mittelung des aktuellen Maximumwertes MAX und des Minimumwertes MIN in der jeweiligen Zeitreihe ermittelt. Insofern verändert sich der Zustandsbasiswert laufend während des Überwachungsvorganges, sodass die Überwachung besser an äußere Einflüsse auf den zu überwachenden technischen Prozess angepasst werden kann. Erst wenn ein Zustandswert außerhalb des Gutwertebereichs liegt, wird ein Alarm ausgelöst. In der dargestellten Ausführungsform ergibt sich die obere Grenze des Gutwertebereichs zu

$$OG = ZB + \frac{GS + OF}{2}$$ während sich die untere Grenze des Gutwertebereichs zu $$UG = ZB - \frac{GS + OF}{2}$$

berechnet.

In der beschriebenen Ausführungsform wird eine Mindestspanne für jede Zeitreihe vorgegeben. Ist die in der Lernphase ermittelte Grenzwertspanne kleiner als die Mindestspanne, wird in der Überwachungsphase erstere durch die Mindestspanne ersetzt.

Um die Daten aus mehreren, korrelierten Messkanälen gleichzeitig zu verarbeiten und in einem gemeinsamen Graphen darzustellen, ist vorgesehen, die Zeitreihen der Messkanäle für eine Zeitbasis jeweils zu normieren. Die Zustandsnormwerte ZN berechnen sich dabei zu

$$ZN = \left( \frac{(ZW - ZB)}{GS * 0{,}5} \right),$$

wobei wiederum ZW der Zustandswert, ZB der Zustandsbasiswert und GS die Grenzwertespanne ist. Der Grenzwertbereich einer Zeitreihe liegt in der normierten Darstellung somit zwischen $\pm 1$. Der Gutwertbereich einer Zeitreihe liegt in der normierten Darstellung bei einem beispielhaften Offset von 10% der Grenzwertspanne zwischen $\pm 1{,}1$. Eine solche normierende Datenaufbereitung ist insbesondere bei der Überwachung einer Bezugsgruppe nützlich, wenn Daten verschiedener Messkanäle miteinander korreliert sind. Beispielsweise sind die in Fig. 1 dargestellten 6 Temperatursensoren für die Festlegung einer solchen Bezugsgruppe sehr gut geeignet, da somit direkt erfasst werden kann, wenn sich z.B. ein Messkanal anders als die anderen verhält.

In der beschriebenen Ausführungsform wird durch das erfindungsgemäße Expertensystem in der Überwachungsphase ein Alarm ausgelöst, wenn ein Zustandswert in einem Prüfblock den Gutwertebereich überschreitet. Dabei wird ein Alarm nur ausgelöst, wenn eine Grenzlinie des Gutwertbereichs von innen nach außen durchschritten wird. Um einen neuen Alarm auszulösen, muss nach einem Alarm zuerst der Zustandswert wieder in den Grenzwertbereich fallen, d.h. er muss mindestens um das voreingestellte Offset abfallen bzw. ansteigen, je nachdem, ob der Gutwertebereich nach oben oder nach unten verlassen wurde.

Sobald der Gutwertebereich verlassen wurde, ermittelt das Expertensystem in der beschriebenen Ausführungsform automatisch die zweite zeitliche Ableitung der betreffenden Zeitreihe. Diese Ableitung wird mit vorgegebenen Werten verglichen und im Ansprechen auf den Vergleich eine Beobachtung der Zeitreihe veranlasst oder eine Warnung an den Nutzer ausgegeben.

Darüber hinaus liegt es auch im Rahmen der Erfindung, aus den Messdaten verschiedener Messkanäle einer Bezugsgruppe Zustandswerte zumindest eines Hybridkanals zu ermitteln, dessen Zeitverlauf wiederum automatisch vom erfindungsgemäßen Expertensystem zur Bereitstellung einer zustandsorientierten Wartung einer Maschine/Anlage überwacht wird. Die Zustandswerte eines solchen Hybridkanals können wie die Zustandswerte eines einzelnen Kanals wie oben stehend beschrieben in Zeitreihen mit unterschiedlichen Zeitbasen zeitverdichtet werden.

Die Verwendung solcher Hybridkanäle soll im Folgenden mit Bezug auf den Betrieb eines Heizkessel beschrieben werden, wobei die Veränderungen des Wärmeübergangs am Wärmetauscher des Kessels überwacht werden soll. In dem angegebenen Beispiel wird der Heizkessel mit Öl betrieben, wobei die Brennenergie des Öls an einen Wärmetauscher abgegeben wird, der einen Wasserkreislauf umfasst. Der Wärmeübergang ist für den Wirkungsgrad des Heizkessels maßgebend, wobei Veränderungen insbesondere durch Ablagerungen und Korrosion hervorgerufen werden können. Am Wärmetauscher sind sechs Temperaturmessungen $T_1$ - $T_6$ vorgesehen, welche in einer Bezugsgruppe zusammengefasst sind. Die Messstellen erfassen die Temperaturverläufe zwischen dem Eingang und dem Ausgang des Wasserkreislaufs, wobei an einer weiteren Messstelle die Umgebungstemperatur $T_{Umgebung}$ erfasst wird. Der Temperatursensor für die Umgebungstemperatur ist dabei so platziert, dass er durch die Wärmestrahlung des Heizkessels unbeeinflusst bleibt. Der gemessene Temperaturwert $T_{Mess}$ an einer der Messstellen setzt sich insofern zusammen aus der betriebsbedingten Temperatur $T_{Betrieb}$ und der Umgebungstemperatur $T_{Umgebung}$:

$$T_{Mess} = T_{Betrieb} + T_{Umgebung}$$

Die Zustandswerte eines ersten Hybridkanal werden nun durch Differenzbildung der Messdaten von jeweils zwei Messkanälen erzeugt:

$$T_{diff} = \sum_{i=1}^{i=2n}(T_{2i-1} - T_{2i}) \text{ wobei } n = 1,2,3 \ldots$$

wobei $T_{diff}$ ein einzelner Zustandswert des Differenzkanals, i der jeweilige Messkanal und $T_i$ ein einzelner Messwert dieses Messkanals darstellen. In der Regel werden die Messdaten $T_i$ der verschiedenen Messkanäle i zum gleichen Zeitpunkt aufgenommen, sodass der berechnete jeweilige Zustandswert $T_{diff}$ des Hybridkanals auch diesem Zeitpunkt zugeordnet ist. In dem angegebenen Beispiel mit sechs Temperaturmessstellen am Heizkessel ist n = 3, sodass sich die Zustandswerte des Differenzkanals ergeben zu:

$$T_{diff} = (T_1 - T_2) + (T_3 - T_4) + (T_5 - T_6).$$

Wie erläutert, fällt die Größe $T_{Umgebung}$ bei der Differenzbildung der Messdaten der Messkanäle innerhalb der Bezugsgruppe heraus, sodass die Zustandswerte des Differenzkanals unabhängig von der Umgebungstemperatur sind.
Da im zeitlichen Verlauf des Differenzkanals nicht erkannt wird, wenn sich die Zustandsgrößen $T_1$ und $T_2$ oder $T_3$ und $T_4$ oder $T_5$ und $T_6$ gleichzeitig ändern, ist ferner die Bildung eines Summenkanals vorgesehen, bei welchem die Messdaten der einzelnen sechs Temperaturmessstellen addiert werden und von der Summe der sechsfache Messwert des Temperatursensors abgezogen wird, welcher die Umgebungstemperatur erfasst:

$$T_{sum} = T_1 + T_2 + T_3 + T_4 + T_5 + T_6 - 6 * T_{Umgebung}.$$

Allgemein kann dies ausgedrückt werden für eine beliebige Anzahl von Messkanälen innerhalb einer Bezugsgruppe durch:

$$T_{sum} = \left[\sum_{i=1}^{i=2n}T_i\right] - (2n) * T_{Umgebung}$$

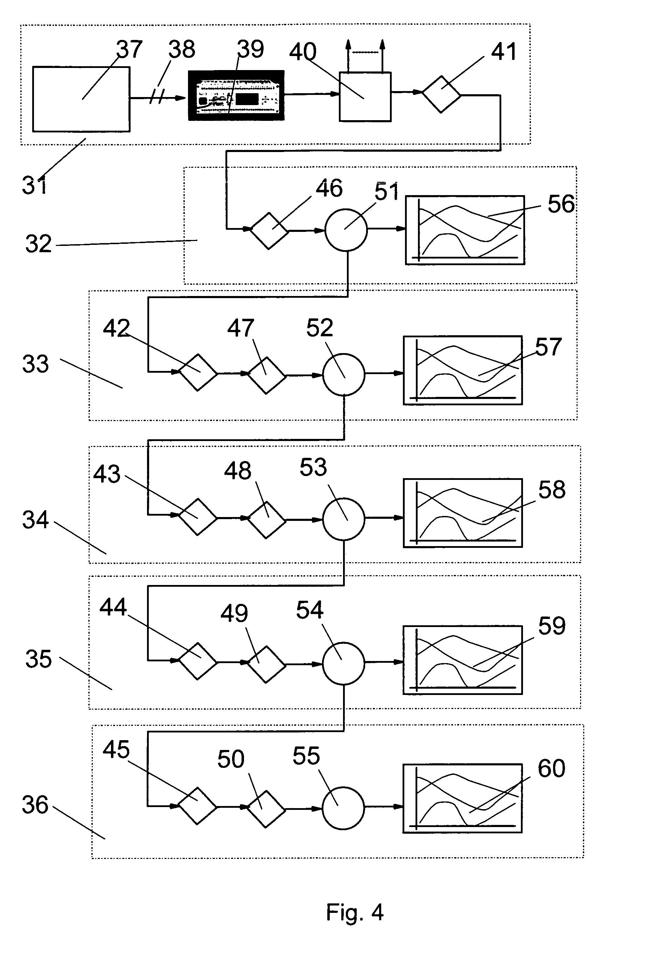

wobei n = 1, 2,3 .... und n wiederum eine natürliche Zahl ist.
Die Zustandswerte $T_{diff}$ und $T_{sum}$ werden durch das erfindungsgemä-βe Expertensystem, wie oben stehend für einen einzelnen Messkanal beschrieben, in Zeitreihen mit unterschiedlichen Zeitbasen zeitverdichtet. In der Lernphase wird auch für jeden der Hybridkanäle in gleicher Weise wie bei einem einzelnen Messkanal eine Grenzwertspanne bestimmt und in der Überwachungsphase ein Gutwertebereich der Zustandswerte für eine Zeitreihe mit oberer und unterer Grenze berechnet unter Einbeziehung der in der Lernphase vorbestimmten Grenzwertspanne und des in der Überwachungsphase bestimmten Zustandsbasiswertes der Zeitreihe. Die Zeitreihen eines Hybridkanals können genauso wie die Zeitreihen eines einzelnen Messkanals für das erfindungsgemäße Verfahren zur Überwachung von technischen Prozessen in Maschinen/Anlagen verwendet werden.
Mit Bezug auf die Figuren 4 - 7 wird im Folgenden ein weiteres Ausführungsbeispiel eines erfindungsgemäß ausgebildeten Expertensystems beschrieben. Soweit nicht gegenteilig dargestellt, arbeitet dieses System wie das mit Bezug auf die Figuren 1 - 3 beschriebene System bzw. ist identisch zu diesem aufgebaut. Figur 4 zeigt ein erfindungsgemäß ausgebildetes Expertensystem, anhand dessen im Folgenden der Datenfluss beim Ablauf eines erfindungsgemäßen Verfahrens zur Überwachung einer Maschine 37 beschrieben wird. Dabei kann die Maschine 37 beispielsweise eine Turbine sein, an welcher Sensoren angebracht sind, über die Prozessdaten wie Temperaturen, Drücke, Durchflüsse etc. sowie Schwingungsdaten erfasst werden. Diese Sensoren an der Maschine 37 sind über Leitungen 38 mit einem Messdatenerfassungsgerät 39 verbunden. Ein Sensor, dessen jeweilige Leitung 38 sowie der zugeordnete Eingang des Messdatenerfassungsgerätes 39 werden hier als Messkanal bezeichnet. Die wesentliche Aufgabe des Messdatenerfassungsgerätes besteht darin, die von den Sensoren erfassten Messwerte in einen digitalen Datenstrom zu wandeln, welcher mit dem verwendeten Datennetz, beispielsweise einem Ethernet kompatibel ist. Darüber hinaus bündelt das Messdatenerfassungssystem zumindest für einige Messkanäle zeitlich hoch aufgelöste Messwerte durch Mittelwertbildung, sodass beispielsweise vom Messdatenerfassungsgerät für bestimmte Messkanäle in Sekundenabstand derartig gemittelte Messwerte abgegeben werden. Ausgangsseitig ist das Messdatenerfassungsgerät 39 mit einer messdatenverarbeitenden Baugruppe 40 verbunden, welche die Messkanäle Bezugsgruppen zuweist. Im Datenflussdiagramm schließt sich daran die Gültigkeitsprüfgruppe 41 an, welche die Messwerte in den verschiedenen Messkanälen nach gültigen und ungültigen Messwerten differenziert. An die Gültigkeitsprüfgruppe schließen sich hintereinander geschaltet die Baugruppe 32 des Minutenprüfblocks, die Baugruppe 33 des Stundenprüfblocks, die Baugruppe 34 des Tagesprüfblocks, die Baugruppe 35 des Wochenprüfblocks und die Baugruppe 36 des Jahresprüfblocks an. Jede dieser Baugruppen 32 - 36 weist eine Funktionseinheit 46 - 50 zur Ermittlung der jeweiligen Grenzspanne/des Gutwertebereichs für die jeweilige Zeitreihe, einen Prüfblockspeicher 51 - 55 sowie grafische Ausgabemittel 56 - 60 zur Darstellung der Zustandswerte in den jeweiligen Zeitreihen (Prüfblöcken). Die Baugruppen 33 des Stundenprüfblocks, 34 des Tagesprüfblocks, 35 des Wochenprüfblocks und 36 des Jahresprüfblocks weisen ferner jeweils eine Funktionseinheit zur Ermittlung des Mittelwerts von Zustandswerten auf. In dem beschriebenen Beispiel besitzt die Baugruppe 32 des Minutenprüfblocks keinen derartigen Mittelwertbildner, da die messwertverarbeitende Baugruppe 40 die Messwerte für jeden Messkanal in Sekundentakt ausgibt und insofern für die Zustandswerte des Minutenprüfblocks keine Mittelung notwendig ist, da die Zustandswerte in dem Minutenprüfblock 32 in Messwerten bestehen, die im Sekundentakt ermittelt sind. Alle Baugruppen 40, 32 - 36 können in einer von PCs unabhängigen, prozessorgesteuerten Hardware implementiert sein, es liegt jedoch auch im Rahmen der Erfindung, die Baugruppen durch die Abarbeitung eines Programms auf einem oder mehreren PCs bereitzustellen, welcher die erforderlichen Eingabe-/Ausgabeports besitzt.

Wie schon erläutert, können die Messdaten der verschiedenen Sensoren an der Maschine 37 in der Baugruppe 40 verschiedenen Bezugsgruppen zugewiesen werden. Beispielsweise können die Schwingungskenndaten von Lagern einer vierfach gelagerten Welle einer einzelnen Bezugsgruppe und diverse Abgastemperaturen einer weiteren Bezugsgruppe zugewiesen werden. Diese Bezugsgruppen, ihre jeweilige Bezeichnung und die Zuweisung der Messkanäle zu den Bezugsgruppen können durch den Anwender per Systemkonfiguration festgelegt werden.

Gemäß Figur 4 ist der Datenausgang der messdatenverarbeitenden Baugruppe 40 mit dem Dateneingang der Gültigkeitsprüfeinheit 41 verbunden. Diese Datenverbindung repräsentiert die Daten einer einzelnen Bezugsgruppe, d.h. die Daten von den Messkanälen, welche dieser Bezugsgruppe zugeordnet sind. Die Datenwege der anderen Bezugsgruppen sind durch die ausgangsseitigen, vertikalen Pfeile der Baugruppe 40 dargestellt und müssen nicht weiter beschrieben werden, da der Datenfluss identisch mit den der im Folgenden beschriebenen einzelnen Bezugsgruppe ist, welcher durch den waagerechten ausgangsseitigen Datenflusspfeil der Baugruppe 40 dargestellt ist.

In der Gültigkeitsprüfeinheit 41 wird geprüft, ob die Messwerte in den Messkanälen der Bezugsgruppe vorgegebene Gültigkeitsbedingungen erfüllen. Dabei können mehrere Gültigkeitsbedingungen formuliert werden. Beispielsweise kann festgelegt sein, dass die besagten Messdaten dann gültig sind, wenn die Drehzahl der Maschine 37 größer als 1.500 U/min. ist. In dem beschriebenen Beispiel stellt diese Gültigkeitsbedingung sicher, dass sich die Maschine 37 in einem quasi statischen Zustand befindet, d.h. dass die Maschine ihre Betriebstemperatur und damit ihren Arbeitspunkt erreicht hat. In der Gültigkeitsprüfeinheit 41 wird jedem Messwert ein Gültigkeitsflag zugeordnet, der auf 1 gesetzt wird, wenn der Messwert gültig ist und auf 0, wenn der Messwert ungültig ist. Nur gültige Messwerte können überwachungsbezogene Schritte auslösen.

Die jeweils mit dem beschriebenen Gültigkeitsflag erweiterten Messwerte der Messkanäle der hier betrachteten Bezugsgruppe werden nun der Prüfblockbaugruppe 32 zugeführt und gelangen dort an den Eingang der Funktionseinheit 46, welche die jeweilige Grenzwertspanne bzw. den jeweiligen Gutwertebereich der verschiedenen Zeitreihen (Prüfblöcken) für den jeweiligen Minutenprüfblock ermittelt. Diese Einheit 46 hat wie die funktionsgleichen Einheiten 47 - 50 während der Lernphase und der Überwachungsphase unterschiedliche Funktionen. Während der Lernphase wird der Wert der Grenzwertspannen aus der Differenz des größten und kleinsten Messwertes innerhalb des Prüfblocks ermittelt. Dagegen werden während der Überwachungsphase in den genannten Einheiten 46 - 50 die Zustandswerte der Zeitreihen dahingehend überprüft, ob diese eine Grenzlinie überschreiten, was einen Alarm auslöst. Diese Grenzlinie wird wie oben stehend für die erste Ausführungsform beschrieben auf der Basis der jeweiligen in der Lernphase ermittelten Grenzwertspanne berechnet.

Während der Lernphase wird bei jedem am Eingang der Einheit 46 ankommenden gültigen oder ungültigen Messwert einer Messreihe der älteste Messwert aus dem Prüfblock entfernt und der neue Messwert als zeitlich jüngster Messwert in den Prüfblock eingefügt und dem Prüfblockspeicher 51 zugeführt. Gleiches gilt in der Überwachungsphase.

Während der Überwachungsphase prüft die Einheit 46, ob sich der jeweilige Messwert innerhalb oder außerhalb des Gutwertebereichs befindet. Dabei wird jedem Messwert neben dem schon beschriebenen Gültigkeitsflag noch ein weiteres Flag, das sogenannte Gutwerteflag hinzugefügt, welches anzeigt, ob während der Überwachungsphase der jeweilige Messwert innerhalb oder außerhalb des Gutwertebereichs liegt. Wenn sich der Messwert im Gutwertebereich befindet, weist in der beschriebenen Ausführungsform dieses Flag den Wert 1 auf. Der Gutwertebereich wird dabei wie oben stehend für die erste Ausführungsform der Erfindung auch unter Berücksichtigung eines vorgegebenen Offsets berechnet.

Befindet sich der jeweilige Messwert außerhalb des Gutwertebereichs, d.h. wird die obere Grenzlinie des Gutwertebereichs überschritten bzw. wird die untere Grenzlinie des Gutwertebereichs unterschritten, siehe auch Figur 3, erhält das Gutwerteflag den Wert 0.

In der beschriebenen Ausführungsform wird ein Messwert zusammen mit einem Gültigkeitsflag und einem Gutwerteflag übertragen, welche zusammengesetzt ein Datenpaket im Datenfluss darstellen.

Wieder Bezug nehmend auf die Funktion der Einheit 46 während der Überwachungsphase wird nach der Erfassung eines Gutwerteflags von 0 geprüft, ob das Gutwerteflag des vorhergehenden Messwertes 1 oder 0 ist. Weist das Gutwerteflag des vorhergehenden Messwertes den Wert 1 auf, so wurde mit dem darauf folgenden Messwert erstmalig eine der Grenzlinien des Gutwertebereichs von innen nach außen überschritten, wodurch die Bedingung eines Alarms gegeben ist. Ein solcher Alarm kann entweder die Aktion einer Beobachtung oder die Aktion einer Warnung auslösen. Eine Beobachtungsaktion wird ausgelöst, wenn die vorhergehenden gültigen Messwerte der Zeitreihe sich auf einer Geraden befinden. Eine Warnaktion wird ausgelöst, wenn die Tendenz der gültigen Messwerte in dem Prüfblock nichtlinear und nicht degressiv, sondern progressiv ist.

Wenn das Gutwerteflag eines Messwertes den Wert 0 erhält, wird das Gültigkeitsflag dieses Wertes in der nächsthöheren Zeitreihe, d.h. für die Baugruppe 33 des Stundenprüfblocks auf 0 gesetzt, d.h. dieser Messwert wird als ungültig gekennzeichnet. Dadurch ist sichergestellt, dass durch den Messwert außerhalb des Gutwertebereichs ein Alarm nur in einer einzelnen Zeitreihe ausgelöst wird und nicht auch noch in den nachfolgenden Zeitreihen mit höheren Zeitbasen. In dieser Ausführungsform werden somit Zustandswerte außerhalb des Gutwertebereichs in die nächsthöhere Zeitreihe eingereiht bzw. verdichtet, wobei jedoch mittels des Gültigkeitsflags sichergestellt wird, dass diese Zustandswerte keinen Alarm in den höheren Zeitreihen auslösen.

Sobald ein Gutwerteflag für einen Zustandswert bzw. einen Messwert in einer Zeitreihe den Wert 0 erhält, wird in der beschriebenen Ausführungsform die Gutwertespanne in der betreffenden Zeitreihe um den Wert 2 x Offset erniedrigt. Dies bedeutet, dass dann sowohl die obere Gutwertegrenze als auch die untere Gutwertegrenze allein durch die in der Lernphase festgelegte Grenzwertspanne und den Zustandsbasiswert der jeweiligen Zeitreihe festgelegt sind, siehe Figur 3. Die nachfolgenden Messwerte bzw. Zustandswerte werden erst dann wieder gültig, wenn diese in den durch die Grenzwertspanne festgelegten Bereich zurückkehren. Dieses Heruntersetzen der Gutwertespanne GWS auf die Grenzwertspanne DS verhindert ein "Flattern" in der Überwachung, wenn sich die Messwerte bzw. Zustandswerte im Bereich der Grenzlinien der Gutwertespanne GWS bewegen.

Bei der Zuordnung des Gültigflags und des Gutwerteflags für einen Messwert bzw. einen Zustandswert können die folgenden Kombinationen auftreten:

| Gültigkeitsflag | Gutwerteflag | Messwert |
|:---:|:---:|---|
| 1 | 1 | gültiger Messwert innerhalb des Gutwertebereichs |
| 0 | 1 | ungültiger Messwert, innerhalb des Gutwertebereichs |
| 1 | 0 | gültiger Messwert, der sich außerhalb der Gutwertebereichs befindet |
| 0 | 0 | ungültiger Messwert, der sich außerhalb des Gutwertebereichs befindet |

Die Messwerte werden von der Einheit 46 gemäß der obigen Tabelle entweder als gültige oder als ungültige Sekundenmesswerte dem Prüfblockspeicher 51 des Minutenprüfblocks zugeführt. Die Prüfblocklänge der einzelnen Zeitreihen in den Speichern 51 - 55 können in der beschriebenen Ausführungsform anwenderseitig in bestimmten Grenzen festgelegt werden. Beispielsweise kann der Minutenprüfblock auf eine zeitliche Länge von 20 Minuten eingestellt werden, er umfasst dann 1200 Sekundenmesswerte.

Während der Überwachungsphase werden bei der Zuführung eines neuen Messwerts in den Minutenprüfblock mehrere Verfahrensschritte ausgeführt. Zuerst wird der älteste Messwert aus dem Prüfblock entfernt und der neue Messwert in den Prüfblock eingefügt. Soweit der Messwert gültig ist, wird überprüft, ob sich der neu eingefügte Messwert innerhalb oder außerhalb des Gutwertebereichs befindet.

Liegt ein gültiger Messwert innerhalb des Gutwertebereichs, wird der aktuelle maximale Messwert (Max) und der aktuelle minimale Messwert (Min) des Prüfblocks ermittelt und daraus durch Mittelwertbildung der neue Basiswert berechnet. Der neue gültige Messwert und der berechnete Basiswert werden dann dem Prüfblockspeicher 51 zugeführt.

Befindet sich jedoch ein gültiger Messwert außerhalb des Gutwertebereichs, wobei das Gutwerteflag des vorhergehenden Messwertes 1 war, bedeutet dies, dass der neue Messwert eine der Gutwertegrenzlinien nach außen durchstoßen hat. Das System löst einen Alarm aus und setzt das Gutwerteflag des betreffenden Messwertes auf 0. Gleichzeitig wird die Gutwertespanne GWS auf die Grenzwertspanne GS herabgesetzt, d.h. der Offset OS wird zeitlich befristet auf 0 gesetzt, siehe Figur 3. Ferner wird der neue Messwert dem Prüfblockspeicher 51 zugeführt.

Befindet sich jedoch der gültige Messwert außerhalb des Gutwertebereichs, wobei das Gutwerteflag des vorhergehenden Messwertes 0 war, bedeutet dies, dass der neue Messwert weiter außerhalb des neu festgelegten Gutwertebereichs liegt. Der neue Messwert wird dem Prüfblockspeicher 51 zugeführt.

Wird dagegen ermittelt, dass ein neuer Messwert eine der beiden Grenzlinien, d.h. entweder die untere oder die obere Grenzlinie des Grenzwertbereichs von außen nach innen durchstoßen hat, wird festgestellt, dass der Messwert in den Gutwertebereich zurückgekehrt ist. Insofern wird das Gutwerteflag auf 1 gesetzt und der MaxWert sowie der MinWert des Prüfblocks ermittelt und darauf wie beschrieben der neue Basiswert berechnet. Gleichzeitig wird die Gutwertespanne wieder durch die Addition des zweifachen Offsets auf die Grenzwertspanne heraufgesetzt. Der neue Messwert und der berechnete Basiswert werden dem Prüfblockspeicher 51 zugeführt.

Wie in Figur 4 dargestellt, werden die Zeitreihen (Prüfblocks) in einer Bezugsgruppe über eine Anzeigevorrichtung 56 grafisch dargestellt, welche mit dem Prüfblockspeicher 51 verbunden ist. Anwenderseitig können verschiedene Darstellungsarten gewählt werden, beispielsweise die in Figur 3 gezeigte oder auch eine als Normwertgrafik bezeichnete, bei welcher verschiedenen Messkanäle mit normierten Amplituden gezeigt sind, sodass die Messwerte aller Messkanäle der Bezugsgruppe miteinander vergleichbar sind, da ihre Messbereiche auf $\pm 1$ normiert sind.

Zur Weitergabe der Messwerte an die nächsthöhere Zeitreihe ist der Prüfblockspeicher 51 mit dem Mittelwertbildner 42 des Stundenprüfblocks 33 verbunden. In der Funktionseinheit 42 werden die im Prüfblock 51 abgelegten Sekundenmesswerte durch Mittelwertbildung in Minutenwerte umgeformt. Hierzu wird dem Mittelwertbildner 42 jeweils im Abstand von 1 Minute die letzten 60 Sekundenwerte des Prüfblockspeichers 51 zugeführt und geprüft, wie hoch der Anteil an gültigen Messwerten ist. Überschreitet dieser Anteil gültiger Sekundenmesswerte einen einstellbaren Grenzwert, wie z. B. 20 %, so wird aus den gültigen Sekundenmesswerten durch Mittelwertbildung ein gültiger Minutenmittelwert berechnet und dessen Gültigkeitsflag auf den Wert 1 gesetzt. Liegt jedoch die Anzahl der gültigen Messwerte unterhalb des beispielhaften Grenzwertes von 20 %, so wird der Mittelwert aller Sekundenwerte gebildet und das Gültigkeitsflag des neu berechneten Minutenwertes auf 0 gesetzt, d.h. der ermittelte Minutenwert ist ungültig. Die wie beschrieben ermittelten Minutenmittelwerte werden zusammen mit dem Gültigkeitsflag an die Einheit 47 übertragen.

Wie in Figur 4 dargestellt, ist hierzu der Ausgang des Mittelwertbildners 42 mit dem Eingang der Einheit 47 verbunden. Dort wird analog wie es oben stehend für die Einheit 46 beschrieben ist, überprüft, ob sich der jeweilige Minutenzustandswert innerhalb oder außerhalb des Gutwertebereichs befindet. Je nach Ergebnis der Überprüfung wird das Gutwerteflag auf 0 oder 1 gesetzt und der gültige bzw. ungültige Minutenmittelwert im Prüfblockspeicher 52 gespeichert. Auch dieser Speicher ist mit einer Anzeigevorrichtung 57 verbunden, die analog zu Vorrichtung 56 arbeitet und selbst eine oder mehrere Stundenzeitreihen in dem Prüfblock der Bezugsgruppe zeigt.

Die Funktionsgruppen für den Tagesprüfblock 34, den Wochenprüfblock 35 und den Jahresprüfblock 36 arbeiten analog wie im Stundenprüfblock beschrieben, wobei jedoch mit unterschiedlichen Zeitbasen gearbeitet wird, da im Minutenprüfblock Sekundenmesswerte, im Stundenprüfblock Minutenmesswerte, im Tagesprüfblock Stundenmesswerte, im Wochenprüfblock Tagesmesswerte und im Jahresprüfblock Wochenmesswerte gespeichert werden. Ein weiterer Unterschied kann in den Prüfblocklängen bestehen. Wie schon angegeben, können die Prüfblocklängen der einzelnen Prüfblöcke in den verschiedenen Zeitbasen anwenderspezifisch festgelegt werden. Beispielsweise kann der Minutenprüfblock auf 20 Minuten, der Stundenprüfblock auf 24 Stunden, der Tagesprüfblock auf 40 Tage, der Wochenprüfblock auf 53 Wochen und der Jahresprüfblock auf 10 Jahre eingestellt werden.

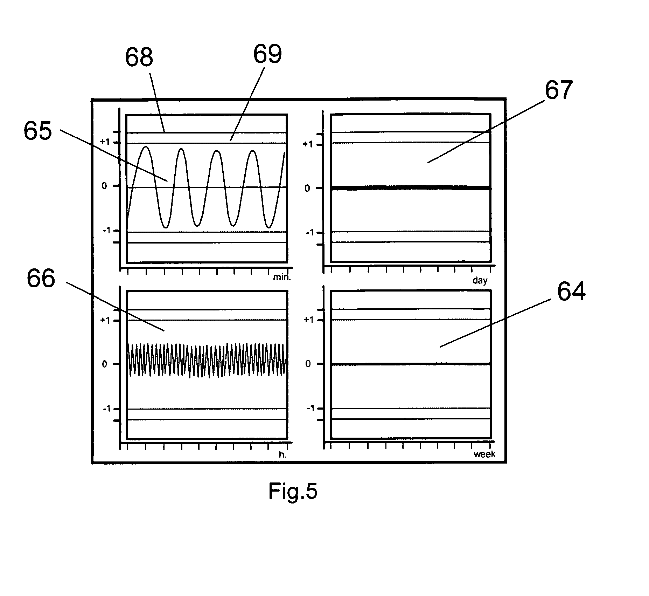

Figur 5 zeigt eine Bildschirmdarstellung, bei welcher vier Grafiken von Prüfblöcken unterschiedlicher Zeitbasen gezeigt sind. Zu erkennen ist eine Minutengrafik 65, eine Stundengrafik 66, eine Tagesgrafik 67 sowie eine Wochengrafik 64, welche den jeweiligen Minutenprüfblock, Stundenprüfblock, Tagesprüfblock bzw. Wochenprüfblock des gleichen Messkanals darstellen. In der Minutengrafik 65 ist die obere Begrenzungslinie des Gutwertebereichs mit dem Bezugszeichen 68 und die obere Begrenzungslinie des Grenzwertbereichs mit dem Bezugszeichen 69 versehen. In dem in der Figur angegebenen Beispiel zeigt die Minutengrafik 65 gültige Sekundenwerte eines Messkanals. Die Werte fluktuieren in einem bestimmten Bereich, derartig, dass sie die Begrenzungslinien des Grenzwertbereichs nicht tangieren. Wie angegeben, zeigt die Stundengrafik 66 den gleichen Messkanal, wobei jedoch die Zustandswerte aufgrund der Mittelwertbildung einer vorgegebenen Anzahl von Sekundenwerten eine viel geringere Fluktuation als die Sekundenwerte aufweisen. Auch die Tagesgrafik 67 zeigt wiederum den gleichen Messkanal, wobei die Kurve aufgrund der nochmaligen Mittelwertbildung in eine im Wesentlichen breite horizontale Linie übergegangen ist. In der Wochengrafik 64 ist die Breite der horizontalen Linie gegenüber der Tagesgrafik weiter verringert.

In der beschriebenen Ausführungsform ist die Steigung der Kurve in der jeweiligen Zeitreihe bestimmend für das Festlegen des überwachungsbezogenen Schritts, welcher beim Überschreiten von vorgegebenen Grenzwerten während der Überwachung des technischen Prozesses ausgelöst wird. Wenn sich die gültigen Messwerte eines Messkanals im Langzeitbereich (Wochenprüf- bzw. Tagesprüfblock) als horizontale Linien darstellen, wird der Gutwertebereich nicht verlassen und somit auch kein Alarm ausgelöst. Das erfindungsgemäße System geht in diesem Fall davon aus, dass keine Wartungsmaßnahmen erforderlich sind, da am Anlagen- bzw. Maschinenzustand keine Veränderungen aufgetreten sind. Erst wenn die Langzeitkurven eine Steigung ungleich 0 zeigen, können Veränderungen am Zustand der zugrunde liegenden Prozesse diagnostiziert werden. Ändern sich die Messwerte in einem mittleren Zeitintervall wie innerhalb einer Woche, zeigt das Durchbrechen der Grenzlinien des Gutwertebereichs in der Regel einen bevorstehenden Crash an. Verlassen jedoch die Mess- bzw. Zustandswerte im Kurzzeitbereich (Sekunden, Stunden) den Gutwertebereich, geht das System von einer Störung wie beispielsweise einer Leckage oder einem Bruch aus und löst einen entsprechenden Alarm aus.

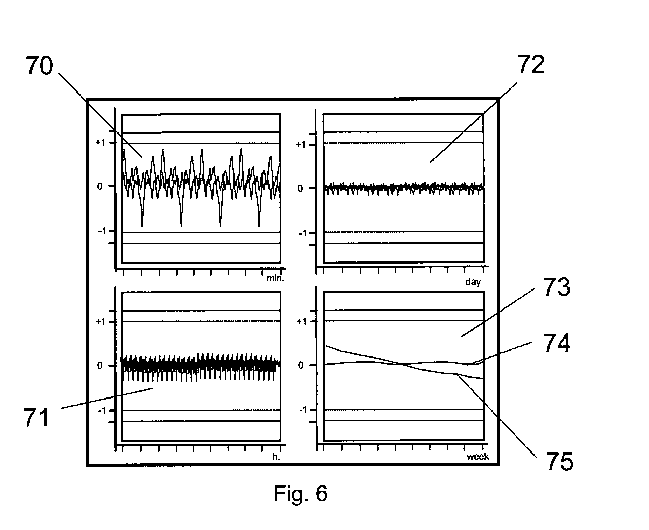

Figur 6 zeigt in ähnlicher Weise wie Figur 5 Grafiken von Prüfblöcken mit hier jeweils einer Minutengrafik 70, einer Stundengrafik 71, einer Tagesgrafik 72 sowie einer Wochengrafik 73 für zwei Messkanäle, welche in einer Bezugsgruppe zusammengefasst sind. Die beiden Messkanäle erfassen jeweils eine Schwingungskennzahl eines Wellenlagers. Wie aus Figur 6 hervorgeht, zeigen die Kurven der Minutengrafik 70, der Stundengrafik 71 und der Tagesgrafik 72 einen üblichen horizontalen Verlauf. Insofern stellt das System im Kurzzeitbereich und im Bereich mittlerer Zeitintervalle keine Auffälligkeiten fest. Alle Zustandswerte liegen innerhalb der jeweiligen Gutwertebereiche. Dagegen ist im Langzeitbereich der Wochengrafik 73, welche 60 Wochenwerte umfasst zu erkennen, dass sich die beiden Messkanäle unterschiedlich verhalten. Während die mit dem Bezugszeichen 74 gekennzeichnete Kurve der Zustandswerte des ersten Messkanals im Wesentlichen horizontal verläuft, weist die Kurve 75 für den zweiten Messkanal eine degressive Steigung auf. Obwohl die Kurve 75 noch innerhalb des Gutwertebereichs liegt, erfasst das System, dass sich das betreffende Lager in seinen Eigenschaften verändert, was die Einleitung von Wartungsschritten erfordert. Demnach kann mit dem erfindungsgemäßen Verfahren zur Überwachung von technischen Prozessen bzw. mit dem erfindungsgemäß ausgebildeten Expertensystem vorausschauend erfasst werden, dass Wartungsarbeiten anstehen, wobei diese Erkenntnis schon besteht, bevor Messwert- bzw. Zustandswertgrenzen überschritten werden.

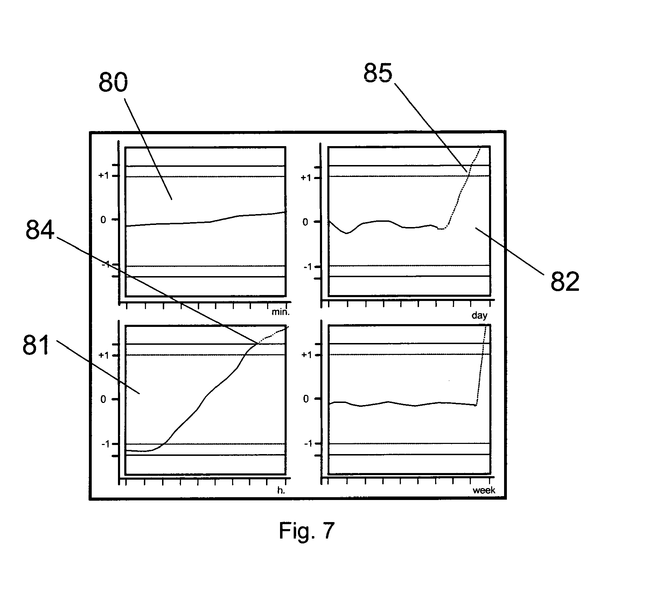

Figur 7 zeigt wiederum Grafiken von Prüfblöcken von jeweils mehreren Messkanälen, wobei die Kurven der Zustandswerte der Zeitreihen auf den jeweiligen Zustandsbasiswert wie in den Figuren 5 und 6 normiert sind um sicherzustellen, dass alle Messkanäle der Bezugsgruppe in einer Grafik mit vorgegebener Zeitbasis übersichtlich dargestellt werden können. Die normierte Minutengrafik ist mit dem Bezugszeichen 80, die normierte Stundengrafik mit dem Bezugszeichen 81 und die normierte Tagesgrafik mit dem Bezugszeichen 82 gekennzeichnet. In der Stundengrafik gibt das Bezugszeichen 84 gerade den Zustandswert an, bei welchem die Zustandskurve den Gutwertebereich verlässt. Wie schon oben stehend beschrieben, wird vom System daraufhin ein Alarm ausgelöst. Wie schon mit Bezug auf Figur 4 erläutert, wird gemäß dem erfindungsgemäßen Verfahren dann auch das Gültigkeitsflag des besagten Zustandswertes auf 0 gesetzt, d.h. dieser Zustandswert und alle folgenden Zustandswerte außerhalb des Gutwertebereichs werden mit dem Gültigkeitsflag als ungültig gekennzeichnet. Dies wiederum hat zur Folge, dass diese ausgegrenzten Zustandswerte für die höheren Zeitreihen auch als ungültig eingeordnet werden. Insofern wird in den höheren Zeitreihen durch das Überschreiten des Gutwertebereichs in der niedrigeren Zeitreihe kein Alarm ausgelöst.

Wie aus Figur 7 ersichtlich, verlässt in der Tagesgrafik 82 die Zustandswertkurve in Punkt 85 ebenfalls den Gutwertebereich. Der Zeitpunkt der Grenzüberschreitung unterscheidet sich jedoch von dem in der Stundengrafik 81. Dadurch, dass die Messwerte dieser Zustandskurve ungültig sind, da sie sich zu diesem Zeitpunkt in der Stundengrafik 81 außerhalb des Gutwertebereichs befinden, wird in der Tagesgrafik 82 bei der Grenzwertüberschreitung kein Alarm ausgelöst. Somit ist sichergestellt, dass durch ein einzelnes Ereignis, z.B. durch den sich ankündigenden Ausfall eines Lagers nur in einer einzelnen Zeitreihe ein Alarm ausgelöst wird, nicht jedoch in den nachfolgenden Zeitreihen des Messkanals. Damit wird verhindert, dass unnötige und nicht relevante Alarme erzeugt werden. Dies wird dadurch erreicht, dass bei der beschriebenen Ausführungsform die als ungültig gekennzeichneten Zustandswerte in die nachfolgenden Zeitreihen eingefügt werden, hier jedoch das Auslösen eines Alarms blockiert wird, da die an die nächste Zeitreihe weitergegebenen Zustandswerte als ungültig gekennzeichnet sind und insofern für die Überprüfung, ob der Gutwertebereich überschritten wurde, unberücksichtigt bleiben.

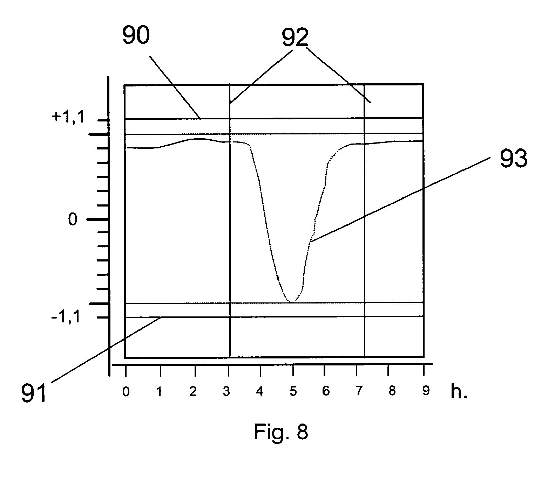

Figur 8 zeigt eine Normwertgrafik, bei welcher die Zustandswerte im Prüfblock wie in Figur 7 so normiert sind, dass die normierte Grenzwertspanne (Normspanne) durch die Spanne zwischen den Werten $\pm 1$ festgelegt ist. Die obere Begrenzung des Gutwertebereichs ist mit dem Bezugszeichen 90 und die untere Begrenzung des Gutwertebereichs mit dem Bezugszeichen 91 gekennzeichnet. Die Grenzlinien des Gutwertebereichs weisen einen Ordinatenwert von $\pm 1,1$ auf. Die in der Grafik dargestellte Zustandswertekurve 93 zeigt einen im Wesentlichen horizontalen Verlauf, der zu einem bestimmten Zeitpunkt einbricht und danach wieder in einen im Wesentlichen horizontalen Verlauf übergeht. In der beschriebenen Ausführungsform des erfindungsgemäßen Verfahrens bzw. des erfindungsgemäß ausgebildeten Expertensystems ist vorgesehen, dass innerhalb der Zustandswertekurve Markierungen anwenderspezifisch gesetzt werden können, um vom System als gültig erkannte Messwerte manuell als ungültig zu kennzeichnen. Die vertikalen Markierungslinien sind in der Grafik mit dem Bezugszeichen 92 angegeben. Durch die Markierung werden die zwischen den vertikalen Linien 92 befindlichen Zustandswerte als ungültig festgelegt, d.h. das Gültigkeitsflag der betreffenden Zustandswerte wird auf 0 gesetzt. Hierdurch können insbesondere Betriebsstörungen, welche in der Lernphase auftreten, für die Auswertung, d.h. die Festlegung der Grenzwertspanne bzw. der Gutwertespanne ausgeblendet werden. Ansonsten wären die während der Lernphase ermittelten Werte für die Grenzwertspanne bzw. die Gutwertespanne verfälscht. Die Verwendung dieser verfälschten Werte in der Überwachungsphase hätte dann zur Folge, dass Ausfallanzeichen nicht erkannt werden könnten, was schlimmstenfalls eine Zerstörung der Anlage bzw. der Maschine zur Folge haben könnte.

Wenn beispielsweise die in Figur 8 gezeigte Zustandswertekurve 93 ein Drucksignal darstellt, dessen Wert betriebsmäßig zwischen 7,5 bar und 8 bar schwankt, so würde die Gutwertespanne 0,5 bar ohne Berücksichtigung eines Offsets betragen. Wenn nun ein in Fig. 8 gezeigter Einbruch durch einen gestörten Sensor auftritt, bei welchem das Sensorsignal zeitweise auf 0 springt, so ergibt sich ein Gutwertebereich von 0 bar bis 8 bar ohne Berücksichtigung des Offsets. Wird jedoch wie beschrieben die in der Lernphase aufgetretene Störung ausgeblendet, kann die wahre Gutwertespanne von 0,5 bar ermittelt.

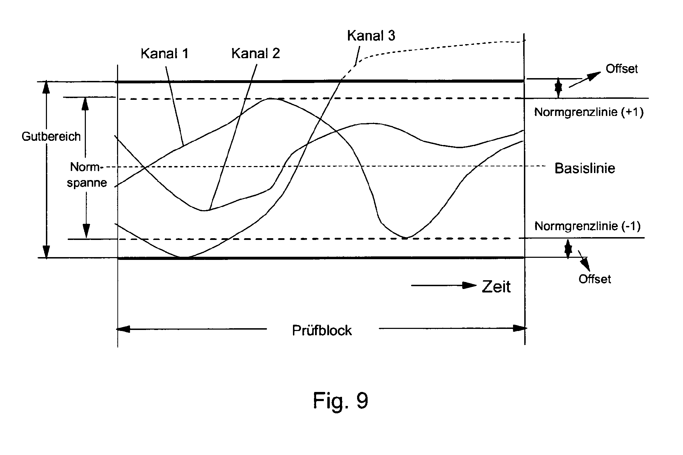

Figur 9 zeigt eine weitere Normwertgrafik, in welcher normierte Zustandswerte dreier Messkanäle gezeigt sind, die einer gemeinsamen Bezugsgruppe angehören können. Andererseits können jedoch auch Messkanäle unterschiedlicher Bezugsgruppen in einer derartigen Normwertgrafik gleichzeitig wiedergegeben und angezeigt werden. Mittels einer derartigen Normwertgrafik können beispielsweise Zustandswerte mehrerer Messkanäle, denen unterschiedliche physikalische Größen wie Temperatur, Druck, Durchfluss, Drehzahl etc. zugrunde liegen, miteinander verglichen werden. Die Kurve Kanal 1 des ersten Messkanals zeigt einen Temperaturverlauf, wobei der Temperaturbereich betriebsmäßig zwischen 475 und 525°C fluktuiert. Dies entspricht einer Spanne von 50°C bei einem Zustandsbasiswert von 500°C. Die Kurve Kana12 zeigt einen weiteren Messkanal den Verlauf eines Druckwertes wiedergibt, welcher betriebsmäßig zwischen 18 bar und 22 bar fluktuiert. Die Zustandsspanne beträgt insofern 4 bar bei einem Zustandsbasiswert von 20 bar. Die Kurve Kanal3 stellt einen weiteren Messkanal dar, der den Verlauf eines Durchflusswertes zeigt, wobei dieser Durchfluss betriebsmäßig zwischen 0,5 und 0,7 m/min fluktuiert. Die Zustandsspanne beträgt hier 0,2 m/min bei einem Basiswert von 0,6 m/min. Bei dem in Figur 9 dargestellten Beispiel sind die Basiswerte wieder wie in den vorangegangenen Beispielen durch Mittelwertbildung des Maximum-und des Minimumwertes innerhalb einer Zeitreihe (Prüfblock) berechnet. Um solche Messkanäle mit sehr unterschiedlichen Messbereichen in einem gemeinsamen Datenraum darzustellen und Daten zu verarbeiten, werden die Zustandswerte der Kanäle in einer gemeinsamen Normwertgrafik dargestellt. Dabei werden die Zustandswerte der unterschiedlichen Kanäle so umgeformt, dass die Grenzlinien der Gutwertebereiche der Messkanäle als horizontale Geraden und für alle Messkanäle in einer Zeitreihe immer auf dem gleichen Niveau liegen, wobei die obere Normgrenzlinie den Wert +1 und die untere Normgrenzlinie den Wert - 1 annimmt. Die Basislinie, welche den normierten Zustandsbasiswert angibt, wird dabei auf 0 gesetzt.

Bei jedem neuen gültigen Mess- bzw. Zustandswert, der einem Prüfblock zugeführt wird, wird die Grafik neu berechnet. Wie in Figur 4 angegeben, sind die Prüfblockspeicher 51 - 55 zur grafischen Ausgabe der Normwertgrafen mit den Ausgabeeinrichtungen 56 - 60 verbunden. Zur Neuberechnung der Normwertgrafik in der Anzeigeeinrichtung 56 liefert der Prüfblockspeicher 51 die Messwerte des Prüfblocks, den aktuellen Maximumwert, den aktuellen Minimumwert sowie den aktuellen Basiswert wie oben stehend mit Bezug auf Figur 4 beschrieben. In der erläuterten Ausführungsform ist der aktuelle Basiswert der Mittelwert des aktuellen Maximumwertes und des aktuellen Minimumwertes der jeweiligen Zeitreihe. Die normierten Zustandswerte ZN werden über die oben stehend angegebene Formel berechnet. Ist ein solcher Zustandsnormwert ZN größer oder kleiner 1 so liegt ZN außerhalb der normierten Grenzwertspanne (Normspanne). Die Gutwertespanne berechnet sich aus der Grenzwertspanne und einem Offset, sodass der normierte Gutwertebereich zwischen $\pm(1 + \text{normierter Offset})$ liegt. Dadurch, dass die Messwerte wie beschrieben in den gleichen Datenraum abgebildet werden, erleichtert sich die Darstellung und die Datenverarbeitung beim erfindungsgemäßen Verfahren zur Überwachung technischer Prozesse. In Figur 9 durchstößt die Kurve Kanal3 den Gutwertebereich, wodurch ein Alarm ausgelöst und ein vorbestimmter überwachungsbezogener Schritt ausgeführt wird.

Nach dem Zuführen eines neuen Zustandswertes in einer der Zeitreihen (Minuten-, Stunden-, Tages-, Wochen- und Jahresprüfblöcke) kann die jeweilige Normgrafik berechnet werden, wodurch immer der aktuelle Zustand des Prozesses für die verschiedenen Zeitreihen angezeigt wird. Beispielsweise kann es zu einem bestimmten Zeitpunkt sein, dass in den Jahresprüfblock, der in der beschriebenen Ausführungsform einen Zeitbereich von 5 Jahren umfasst, ein neuer Wochenwert eingespeist wird. Dieser Wochenwert ist der gültige Mittelwert aller gültigen Messwerte, die in diesem Zeitraum erfasst wurden. Mit jedem in dem jeweiligen Prüfblock eingeführten neuen Zustandswert wird demnach die Zustandsgeschichte aktualisiert. Wenn der neu in den jeweiligen Prüfblock eingefügte Zustandswert ein neuer Maximumwert oder ein neuer Minimumwert ist, wird auch der Basiswert aktualisiert. Letztlich entsteht ein gleitendes Zustandsbild des zugrunde liegenden Prozesses. In dem in Figur 9 dargestellten Beispiel tangieren die Messwerte des Kanals 1 die Normgrenzlinien $\pm 1$. Dies zeigt an, dass aufgrund der Betriebsbedingungen die während der Lernphase ermittelten Grenzen im Betrieb ausgeschöpft werden. Dagegen sind der Maximumwert und Minimumwert der Kurve im Kanal 2 weit von den Grenzen der Normspanne entfernt, sodass es sich hier um eine ruhige Betriebsphase handelt, bei welcher die Maschinenteile weniger hoch beansprucht werden. Die Kurve der Zustandswerte von Kanal 3 durchstößt in der in Figur 9 dargestellten Grafik die obere Normgrenzlinie +1 von innen nach außen, sodass ein Alarm ausgegeben wird. Je nachdem, welcher Zeitbereich zugrunde liegt, wird hierdurch ein baldiger Ausfall signalisiert oder auf eine notwendige Wartung hingewiesen.

Es ist zur Kenntnis zu nehmen, dass das erfindungsgemäße Verfahren zur Überwachung von technischen Prozessen bzw. das zugeordnete Expertensystem mit Bezug auf ein einfaches Beispiel erläutert wurde, bei welchem ein bzw. sechs Temperaturwerte erfasst wurde und mittels einer Datenverarbeitung der Zeitpunkt festgelegt wird, an dem überwachungsbezogenen Schritte wie die Ausgabe eines Beobachtungshinweises, die Ausgabe eines Warnhinweise, die Ausgabe eines Steuersignals etc. ausgelöst werden. Wie der Fachmann erkennt, ist die erfindungsgemäße Idee insbesondere auch auf komplexe technische Prozesse wie Produktionsmaschinen bzw. -anlagen mit einer prinzipiell beliebigen Anzahl von Messkanälen anwendbar. Es kann durch Trendkurven sowie durch Bebachtungs- und Warnlisten zuverlässige Information über den Zustand der Anlagen bereitgestellt werden und automatisch die notwendigen Schritte eingeleitet werden. Durch die Erfassung von mittelfristig bzw. langfristig auftretenden Anomalien im zeitlichen Verlauf der Zeitreihen der Messkanäle sind bevorstehende Crashs vorhersehbar bzw. der Zeitpunkt von Wartungsarbeiten festlegbar, sodass längere Laufzeiten realisierbar sind. Ein weiterer Vorteil der Erfindung liegt auch in der Möglichkeit der Ursachenforschung für auftretende Probleme. Die lückenlose Aufzeichnung der Entwicklung in den Messkanälen mit unterschiedlichen Zeitbasen lassen Rückschlüsse auf den Grund von erfassten Veränderungen zu.

Während der Lernphase arbeitet die Anlage/Maschine im Normalbetrieb, sodass durch die Erfindung in der Regel keine Betriebsstillzeiten verursacht werden. Sobald die unterschiedlichen Betriebszustände des störungsfreien Normalbetriebes in der Lernphase erkannt wurden, kann die Überwachungsphase freigegeben werden.

**Bezugszeichenliste**

| | |
|---|---|
| 10 | Expertensystem |
| 11 | Messeinheit |
| 12a)-f) | Temperatursensoren |
| 13 | PC |
| 14 | Antriebswelle |
| 15a)-f) | Lager |
| 16a), b) | Zahnrad |
| 17 | Elektromotor |
| 20 | Gültigkeitsmodul |
| 22 | Prüfblock-Erzeugungsmodul |
| 23 | Prüfblock-Speichermodul |
| 24 | Trendausgabe-Modul |
| 26 | Bewertungsmodul |
| 28 | Modul zur Einleitung überwachungsrelevanter Schritte |
| 29 | Datenbank |
| 32 | Baugruppe des Minutenprüfblocks |
| 33 | Baugruppe des Stundenprüfblocks |
| 34 | Baugruppe des Tagesprüfblocks |
| 35 | Baugruppe des Wochenprüfblocks |
| 36 | Baugruppe des Jahresprüfblocks |
| 37 | Maschine |
| 38 | Leitung |
| 39 | Messdatenerfassungsgerät |
| 40 | Messdatenverarbeitende Baugruppe |
| 41 | Gültigkeitsprüfeinheit |
| 46, 47, 48 49, 50 | Funktionseinheit zur Ermittlung der jeweiligen Grenzspanne in der Lernphase bzw. zur Erfassung einer Überschreitung des Gutwertebereichs in der Überwachungsphase |
| 51, 52, 53 54, 55 | Prüfblockspeicher |
| 56, 57, 58 59, 60 | Anzeigevorrichtung |
| 65 | Minutengrafik |
| 66 | Stundengrafik |
| 67 | Tagesgrafik |
| 68 | Obere Begrenzungslinie des Grenzwertbereichs |
| 69 | Untere Begrenzungslinie des Grenzwertbereichs |
| 70 | Minutengrafik |
| 71 | Stundengrafik |
| 72 | Tagesgrafik |
| 73 | Wochengrafik |
| 74 | Zustandswertekurve des ersten Messkanals in der Wochengrafik |
| 75 | Zustandswertekurve des zweiten Messkanals in der Wochengrafik |
| 80 | Normierte Minutengrafik |

| 81 | Normierte Stundengrafik |
| 82 | Normierte Tagesgrafik |
| 84 | Zustandswert auf der Gutwertgrenze |
| 90 | Obere Grenzlinie des Gutwertbereichs |
| 91 | Untere Grenzlinie des Gutwertbereichs |
| 92 | Markierungslinie |
| 93 | Zustandswertekurve |
| GS | Grenzwertspanne |
| GWS | Gutwertspanne |
| Max | Maximaler Zustandswert einer Zeitreihe |
| Min | Minimaler Zustandswert einer Zeitreihe |
| OS | Offset |
| ZB | Zustandsbasis |
| ZN | Normierter Zustandswert |
| ZW | Zustandswert |

**Patentansprüche**

1. Verfahren zur Überwachung von technischen Prozessen in Maschinen, Anlagen oder dgl., wobei Messdaten über zumindest einen Messkanal erfasst und die Messdaten eines Messkanals in mehrere Zeitreihen von Zustandswerten mit zueinander unterschiedlichen Zeitbasen verarbeitet werden und wobei in einer Lernphase Grenzwertspannen ermittelt und in einer Überwachungsphase beim Überschreiten von Grenzwerten überwachungsbezogene Schritte ausgelöst werden, **dadurch gekennzeichnet , dass** in der Überwachungsphase ein Gutwertebereich der Zustandswerte (ZW) für eine Zeitreihe mit oberem und unterem Grenzwert berechnet wird unter Einbeziehung einer in der Lernphase vorbestimmten Grenzwertspanne (GS) und eines in der Überwachungsphase bestimmten Zustandsbasiswertes (ZB) der Zeitreihe.

2. Verfahren nach Anspruch 1, **dadurch gekennzeichnet, dass** oberer bzw. unterer Grenzwert der Zeitreihe durch das Addieren bzw. Subtrahieren der halbierten Grenzwertspanne (GS) zum bzw. vom Zustandsbasiswert (ZB) der Zeitreihe berechnet wird.

3. Verfahren nach Anspruch 1 oder 2, **dadurch gekennzeichnet , dass** eine Zeitreihe eine vorbestimmte Anzahl von Werten (Prüfblock) umfasst und der Zustandsbasiswert (ZB) der Zeitreihe in der Überwachungsphase durch eine Datenverarbeitung von zumindest zwei aktuellen Gutwerten der Zeitreihe, insbesondere durch Mittelwertbildung des MaxWertes (MAX) und des MinWertes (MIN) der Zeitreihe oder durch Mittelwertbildung aller Gutwerte der Zeitreihe berechnet wird.

4. Verfahren nach Anspruch 1, 2 oder 3, **dadurch gekennzeichnet , dass** die Zustandswerte (ZW) einer Zeitreihe auf den Zustandsbasiswert (ZB) normiert werden.

5. Verfahren nach Anspruch 4, **dadurch gekennzeichnet , dass** die normierten Zustandswerte mehrerer Zeitreihen mit gleicher Zeitbasis in einer gemeinsamen Normwertgraphik (80, 81, 82) dargestellt werden.

6. Verfahren nach einem der Ansprüche 1 bis 5, **dadurch gekennzeichnet , dass** eine vorbestimmte Gutwertspanne (GWS) einer Zeitreihe aus der in der Lernphase ermittelten Grenzwertspanne (GS) und einem Offset (OS) berechnet wird.

7. Verfahren nach Anspruch 6, **dadurch gekennzeichnet , dass** die Grenzwertspanne (GS) einer Zeitreihe durch die Schwankungsbreite der Zustandswerte der Zeitreihe in der Lernphase festgelegt wird.

8. Verfahren nach einem der Ansprüche 1 bis 7, **dadurch gekennzeichnet , dass** in Bezug auf einen Messkanal in der Lernphase ein Zustandswert (ZW) der Zeitreihe mit niedrigster Zeitbasis kontinuierlich ermittelt und in die Zeitreihe eingefügt wird und/oder in der Überwachungsphase ein Gutwert der Zeitreihe mit niedrigster Zeitbasis kontinuierlich ermittelt und in die Zeitreihe eingefügt wird.

9. Verfahren nach einem der Ansprüche 1 bis 8, **dadurch gekennzeichnet, dass** in Bezug auf einen Messkanal in der Lernphase ein Zustandswert (ZW) einer Zeitreihe mit vorgegebener Zeitbasis durch statistische Auswertung, insbesondere durch Mittelwertbildung, von Zustandswerten der Zeitreihe mit einer niedrigeren Zeitbasis ermittelt und in die erstgenannte Zeitreihe eingefügt wird und/oder in der Überwachungsphase ein Gutwert einer Zeitreihe mit vorgegebener Zeitbasis durch statistische Auswertung, insbesondere durch Mittelwertbildung, von Gutwerten der Zeitreihe mit einer niedrigeren Zeitbasis ermittelt und in die erstgenannte Zeitreihe eingefügt wird.

10. Verfahren nach einem der Ansprüche 8 oder 9, **dadurch gekennzeichnet, dass** bei der Einreihung des neu ermittelten Wertes in die jeweilige Zeitreihe der älteste Wert aus der Zeitreihe entfernt wird, wenn eine für die Zeitreihe vorgegebene Anzahl von eingereihten Werten erreicht wurde.

11. Verfahren nach einem der Ansprüche 9 oder 10, **dadurch gekennzeichnet, dass** erst nach dem Vorliegen einer vorbestimmten Mindestanzahl von Gutwerten in der Überwachungsphase bzw. von Zustandswerten in der Lernphase innerhalb des Zeitintervalls einer Zeitreihe ein gültiger Gutwert bzw. ein Zustandswert für die nächsthöhere Zeitreihe berechnet wird.

12. Verfahren einem der Ansprüche 8 bis 11, **dadurch gekennzeichnet , dass** in der Überwachungsphase beim Auftreten eines Zustandswertes in einer Zeitreihe mit vorgegebener Zeitbasis, der außerhalb des Gutwertebereichs liegt, ein überwachungsbezogener Schritt, insbesondere ein Beobachtungshinweis für die betreffende Zeitreihe ausgegeben wird.

13. Verfahren nach Anspruch 12, **dadurch gekennzeichnet , dass** ein vom zeitlichen Verlauf der Zeitreihe abhängiger Parameter, insbesondere eine zeitliche Ableitung des Kurvenverlaufs erfasst wird und in Abhängigkeit dieses Parameters ein vorgegebener überwachungsbezogener Schritt, insbesondere ein Alarmhinweis für die betreffende Zeitreihe ausgegeben wird.

14. Verfahren nach einem der Ansprüche 8 bis 13, **dadurch gekennzeichnet dass** in der Überwachungsphase ein außerhalb des Gutwertebereichs liegender Zustandswert einer Zeitreihe nicht zur Ermittlung eines Zustandswertes der Zeitreihe mit einer höheren Zeitbasis verwendet wird.

15. Verfahren nach Anspruch 12, **dadurch gekennzeichnet , dass** nach dem Auftreten eines außerhalb des Gutwertebereichs liegenden Zustandswertes in der Zeitreihe, die nachfolgend ermittelten Zustandswerte einer Zeitreihe so lange als ungültig verworfen werden, bis ein Zustandswert in einem Werteintervall liegt, das allein durch die Grenzwertspanne und den Zustandsbasiswert der Zeitreihe festgelegt wird.

16. Verfahren nach einem der Ansprüche 1 bis 15, **dadurch gekennzeichnet , dass** für eine Zeitreihe eine Mindestzustandsspanne festgelegt wird, welche die in der Lernphase ermittelte Grenzwertspanne (GS) ersetzt, wenn letztere kleiner als die Mindestzustandsspanne ist.

17. Verfahren nach einem der Ansprüche 1 bis 15, **dadurch gekennzeichnet, dass** durch Differenzbildung von Messdaten aus physikalisch korrelierten Messkanälen Zustandswerte eines Hybridkanals gebildet werden.

18. Verfahren nach einem der Ansprüche 1 bis 15, **dadurch gekennzeichnet, dass** durch Summenbildung von Messdaten aus physikalisch korrelierten Messkanälen Zustandswerte eines Hybridkanals gebildet werden.

19. Verfahren nach einem der Ansprüche 17 oder 18, **dadurch gekennzeichnet, dass** die Zustandswerte eines Hybridkanals in mehrere Zeitreihen von Zustandswerten mit zueinander unterschiedlichen Zeitbasen verarbeitet werden.

20. Verfahren nach einem der Ansprüche 1 bis 18, **dadurch gekennzeichnet, dass** jedem Zustandswert einer Zeitreihe zumindest zwei Informationen zugeordnet werden, insbesondere eine Information über die Gültigkeit des Zustandswertes und eine Information darüber, ob der Zustandswert innerhalb des Gutwertebereichs der jeweiligen Zeitreihe liegt.

21. Expertensystem zur Überwachung von technischen Prozessen mit zumindest einem Messkanal, welcher Sensor-, Leitungs-und Auswertemittel aufweist zur Erfassung von Messdaten, Datenverarbeitungsmittel zum Verarbeiten der Messdaten und zum Ermitteln von mehreren Zeitreihen von Zustandswerten mit unterschiedlichen Zeitbasen aus den Messdaten, Speichermittel zum Speichern der Zeitreihen von Zustandsdaten, wobei in einer Lernphase Grenzwertspannen der Zeitreihen berechenbar und speicherbar sind, und mit einem Mittel zur Ausführung eines überwachungsbezogenen Schrittes, insbesondere mit einem Anzeigemittel zur Anzeige, dass in einer Überwachungsphase ein Zustandswert einen Grenzwert überschritten hat, **dadurch gekennzeichnet, dass** das Datenverarbeitungsmittel (46 - 50) in der Überwachungsphase für eine Zeitreihe ein Gutwertebereich mit oberem und unterem Grenzwert unter Einbeziehung einer in der Lernphase vorbestimmten Grenzwertspanne (GS) und eines in der Überwachungsphase bestimmten Zustandsbasiswertes (ZB) der Zeitreihe berechnet.

22. Expertensystem nach Anspruch 21, **dadurch gekenn- zeichnet, dass** Zustandswerte mit einer Zeitmarke versehen sind.

23. Auf einem Speichermedium abgelegtes Computerprogrammprodukt, das in einen Speicher eines Computer geladen werden kann und das Softwarecodeabschnitte umfasst, mit denen ein Verfahren nach einem der Ansprüche 1 bis 18 ausgeführt wird, wenn das Produkt auf dem Computer abläuft.

**Geänderte Patentansprüche gemäss Regel 137(2) EPÜ.**

1. Verfahren zur Überwachung von technischen Prozessen in Maschinen, Anlagen oder dgl., wobei Messdaten über zumindest einen Messkanal erfasst und die Messdaten eines Messkanals in mehrere Zeitreihen von Zustandswerten mit zueinander unterschiedlichen Zeitbasen verarbeitet werden und wobei in einer Lernphase Grenzwertspannen ermittelt und in einer Überwachungsphase beim Überschreiten von Grenzwerten überwachungsbezogene Schritte ausgelöst werden, **dadurch gekennzeichnet, dass** in der Überwachungsphase **für eine Zeitreihe** ein Gutwertebereich der Zustandswerte (ZW) mit oberem und unterem Grenzwert berechnet wird unter Einbeziehung einer in der Lernphase vorbestimmten Grenzwertspanne (GS) und eines in der Überwachungsphase bestimmten Zustandsbasiswertes (ZB) der Zeitreihe.

12. Verfahren **nach** einem der Ansprüche 8 bis 11, **dadurch gekennzeichnet, dass** in der Überwachungsphase beim Auftreten eines Zustandswertes in einer Zeitreihe mit vorgegebener Zeitbasis, der außerhalb des Gutwertebereichs liegt, ein überwachungsbezogener Schritt, insbesondere ein Beobachtungshinweis für die betreffende Zeitreihe ausgegeben wird.

15. Verfahren nach Anspruch 6, **dadurch gekennzeichnet, dass** nach dem Auftreten eines außerhalb des Gutwertebereichs liegenden Zustandswertes **(ZW)** in der Zeitreihe, die nachfolgend ermittelten Zustandswerte **der** Zeitreihe so lange als ungültig verworfen werden, bis ein Zustandswert in einem Werteintervall liegt, das allein durch die Grenzwertspanne und den Zustandsbasiswert der Zeitreihe festgelegt wird **und dessen Intervallbreite gleich der Grenzwertspanne ist**.

21. Expertensystem zur Überwachung von technischen Prozessen mit zumindest einem Messkanal, **umfassend** Sensor-, Leitungs- und Auswertemittel zur Erfassung von Messdaten, Datenverarbeitungsmittel zum Verarbeiten der Messdaten und zum Ermitteln von mehreren Zeitreihen von Zustandswerten mit unterschiedlichen Zeitbasen aus den Messdaten, Speichermittel zum Speichern der Zeitreihen von Zustandsdaten, wobei in einer Lernphase Grenzwertspannen der Zeitreihen berechenbar und speicherbar sind, **sowie** ein Mittel zur Ausführung eines überwachungsbezogenen Schrittes, insbesondere ein Anzeigemittel zur Anzeige, dass in einer Überwachungsphase ein Zustandswert einen Grenzwert überschritten hat, **dadurch gekennzeichnet, dass** das Datenverarbeitungsmittel (46 - 50) in der Überwachungsphase für eine Zeitreihe einen Gutwertebereich mit oberem und unterem Grenzwert unter Einbeziehung einer in der Lernphase vorbestimmten Grenzwertspanne (GS) und eines in der Überwachungsphase bestimmten Zustandsbasiswertes (ZB) der Zeitreihe berechnet.

Fig. 1

**Fig. 2**

Fig. 3

EP 1 892 597 A1

Fig. 4

Fig.5

Fig. 6

Fig. 7

Fig. 8

Fig. 9

**Europäisches**
**Patentamt**

**EUROPÄISCHER RECHERCHENBERICHT**

Nummer der Anmeldung

EP 06 01 7842

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | EP 1 533 669 A (RENNER PETER [DE]) 25. Mai 2005 (2005-05-25) Zusammenfassung * Absatz [0015] * * Absatz [0016] * * Absatz [0018] * * Absatz [0019] * * Absatz [0034] * * Absatz [0035] * * Spalte 2, Zeile 4 - Spalte 2, Zeile 7 * * Spalte 3, Zeile 49 - Spalte 4, Zeile 13 * * Spalte 4, Zeile 31 - Spalte 4, Zeile 36 * * Spalte 4, Zeile 47 - Spalte 4, Zeile 52 * * Spalte 4, Zeile 58 - Spalte 5, Zeile 13 * | 1,2,4-23 | INV. G05B23/02 G07C3/00 G05B19/418 |
| A | ----- | 3 | |
| A | DE 10 2004 004065 A1 (VAILLANT GMBH [DE]) 12. August 2004 (2004-08-12) Zusammenfassung * Absatz [0024] * | 1-23 | RECHERCHIERTE SACHGEBIETE (IPC) G05B G07C |
| A | ----- EP 1 542 108 A (SIEMENS AG [DE]) 15. Juni 2005 (2005-06-15) Zusammenfassung | 1-23 | |
| D,A | ----- EP 1 403 750 A (RENNER PETER [DE]) 31. März 2004 (2004-03-31) Zusammenfassung | 1-23 | |
| A | ----- US 2005/033464 A1 (NGUYEN TUAN MINH [DE]) 10. Februar 2005 (2005-02-10) Zusammenfassung * Anspruch 4 * * Anspruch 5 * ----- | 1-23 | |

Der vorliegende Recherchenbericht wurde für alle Patentansprüche erstellt

| Recherchenort | Abschlußdatum der Recherche | Prüfer |
|---|---|---|
| München | 2. Februar 2007 | Dörre, Thorsten |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 01 7842

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-02-2007

| Im Recherchenbericht angeführtes Patentdokument | | Datum der Veröffentlichung | Mitglied(er) der Patentfamilie | | Datum der Veröffentlichung |
|---|---|---|---|---|---|
| EP 1533669 | A | 25-05-2005 | US | 2005171705 A1 | 04-08-2005 |
| DE 102004004065 | A1 | 12-08-2004 | EP | 1479984 A1 | 24-11-2004 |
| EP 1542108 | A | 15-06-2005 | CN | 1890615 A | 03-01-2007 |
| | | | WO | 2005057310 A1 | 23-06-2005 |
| EP 1403750 | A | 31-03-2004 | US | 2004098233 A1 | 20-05-2004 |
| US 2005033464 | A1 | 10-02-2005 | WO | 2005015403 A2 | 17-02-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1403750 A1

- EP 1533669 A1